# FASCICULE DE BREVET EUROPEEN

(11) **EP 4 449 208 B1**
(45) Date de publication et mention de la délivrance du brevet: **04.02.2026**
(21) Numéro de dépôt: 22830814.4
(22) Date de dépôt: 07.12.2022
(51) Int. Cl.: G05B 9/03, G05B 19/418

(54) **SYSTÈME POUR LA CONDUITE ET L'AIDE À LA CONDUITE D'UN PROCESSUS INDUSTRIEL CRITIQUE ET PROCÉDÉ ASSOCIÉ**
SYSTEM ZUR DURCHFÜHRUNG UND UNTERSTÜTZUNG DER LEISTUNG EINES KRITISCHEN INDUSTRIELLEN PROZESSES UND ZUGEHÖRIGES VERFAHREN
SYSTEM FOR PERFORMING AND ASSISTING WITH PERFORMANCE OF A CRITICAL INDUSTRIAL PROCESS AND ASSOCIATED METHOD

(30) Priorité: 14.12.2021 FR 2113493
(43) Date de publication de la demande: 23.10.2024
(73) Titulaire: Worldgrid France SAS, 95870 Bezons (FR); Electricité de France, 75008 Paris (FR)
(72) Inventeur: JADOT, Franck, 38530 Pontcharra (FR); PEBAY PEYROULA, François, 38180 Seyssins (FR); DESCHAMPS, Olivier, 38920 Crolles (FR); HOCQUETTE, Jean-Claude, 38920 Crolles (FR); DOUTRE, Jean-Luc, 74940 Annecy le Vieux (FR); FAUQUEMBERGUE, Pascal, 92260 Fontenay aux Roses (FR); ROCHEFORTI, Laurent, 78300 Poissy (FR); BAUMGARTEN, Caroline, 75014 Paris (FR)
(74) Mandataire: Novagraaf Technologies
(86) Numéro de dépôt international: PCT/EP2022/084737
(87) Numéro de publication internationale: WO 2023/110571

(56) Documents cités:
- EP-A2- 0 381 334
- FR-A1- 2 700 401
- US-A1- 2018 191 876
- US-A1- 2021 223 761

## Description

### DOMAINE TECHNIQUE DE L'INVENTION

Le domaine technique de l'invention est celui des systèmes et procédés de pour la conduite et l'aide à la conduite d'un processus industriel et plus particulièrement celui des systèmes et procédés pour la conduite et l'aide à la conduite d'un processus industriel critique. US 2021/223761 A1 divulgue un exemple d'un tel processus industriel critique.

La présente invention concerne un système pour la conduite et l'aide à la conduite d'un processus industriel critique. La présente invention concerne également un procédé de conduite d'un processus industriel mis en œuvre par le système, et un produit-programme d'ordinateur.

### ARRIERE-PLAN TECHNOLOGIQUE DE L'INVENTION

Pour la conduite de processus industriels fonctionnant en continu, comme par exemple le processus de triage dans une gare de triage ou encore le processus automatique de fabrication d'un dispositif dans une usine, il est courant d'avoir recours à une architecture SCADA (pour « Supervisory Control And Data Acquisition ») réalisant l'acquisition de données et la commande en temps réel d'un processus industriel via des automates programmables industriels, en calculant à partir des données acquises, des informations sur l'état du processus industriel utilisées pour sa commande et sa supervision.

Pour assurer la sûreté du processus industriel et donc plus particulièrement dans le cas de la conduite de processus industriels critiques, comme par exemple le processus de gestion de la fourniture d'énergie par un réseau électrique ou par une centrale de production d'énergie électrique, l'architecture doit répondre à plusieurs exigences de sûreté, stipulées par exemple par la classe 2 selon IEC 61513 ou SIL2 selon IEC 61508. En particulier, l'architecture doit être fiable, à haute disponibilité, c'est-à-dire entièrement redondante et permettant de répondre à des exigences de disponibilité sur une période ayant une durée supérieure à une dizaine d'années, capable d'échanger un grand nombre d'informations, typiquement de l'ordre de 60 000 informations élémentaires et 20 000 commandes numériques, et de calculer un grand nombre d'informations, typiquement plus de 50 000 informations, dans des temps de traitement de quelques centaines de millisecondes à 2 ou 3 secondes et de mettre à disposition ces informations de manière centralisée et en cohérence temporelle au niveau des postes opérateurs.

Pour répondre à ces exigences de sûreté, il est connu d'utiliser des systèmes de haut niveau de sûreté complémentaires au système principal de conduite, tels que les systèmes SPDS pour « Safety Parameter Display System » configurés pour afficher les informations essentielles pour la sûreté de fonctionnement, éventuellement couplés à un panneau de repli permettant de mettre le processus en état sûr de repli en cas de panne du système principal de conduite.

Cependant, de tels systèmes ont une capacité de surveillance limitée, de l'ordre de 1000 à 3000 informations, et ne permettent pas de passer des commandes vers le processus. Ils ne sont donc pas adaptés à la conduite de gros processus industriels critiques.

Il existe donc un besoin d'un système pour la conduite d'un processus industriel critique répondant aux exigences de sûreté précitées et ne nécessitant pas de systèmes de sureté complémentaires.

### RESUME DE L'INVENTION

L'invention offre une solution aux problèmes évoqués précédemment, en proposant un système de conduite d'un processus industriel à haute disponibilité, fiable, et fournissant de manière centralisée aux postes opérateurs des informations cohérentes et fiables en temps réel.

Un premier aspect de l'invention concerne un système pour la conduite et l'aide à la conduite d'un processus industriel critique comprenant :
- Un premier ensemble de postes opérateurs comprenant chacun une interface graphique et étant chacun configuré pour :
   - recevoir des consignes d'un opérateur via l'interface graphique ;
   - afficher à un instant courant et sur demande de l'opérateur, des premières informations d'un sous-ensemble d'informations, le sous-ensemble d'informations étant compris dans un ensemble d'informations relatives au processus industriel, l'ensemble d'informations comprenant un groupe d'informations pour chaque instant d'acquisition d'une pluralité d'instants d'acquisition précédant l'instant courant, chaque groupe d'informations comprenant des premières informations pour la conduite du processus industriel et des deuxièmes informations pour l'aide à la conduite du processus industriel ;
- Un deuxième ensemble de postes opérateurs chacun configuré pour afficher à l'instant courant et sur demande de l'opérateur, les deuxièmes informations du sous-ensemble d'informations ;
- Un premier sous-système pour la conduite du processus industriel présentant un fonctionnement cyclique, un deuxième sous-système pour l'aide à la conduite du processus industriel présentant un fonctionnement événementiel et un dispositif de séparation unidirectionnel compris dans le premier sous-système et dans le deuxième sous-système, comportant un couple de calculateurs ;
- Le premier sous-système comprenant :
   - Un module d'interface configuré pour collecter d'une pluralité d'automates programmables industriels présentant chacun un modèle d'automate, des données, chaque donnée étant associée à un instant d'acquisition de la pluralité d'instants d'acquisition, le module d'interface comportant au moins un couple de calculateurs pour chaque modèle d'automate, chaque calculateur du couple de calculateurs étant configuré pour :
      - collecter chaque donnée reçue par chaque automate présentant le modèle d'automate et éliminer chaque donnée reçue en double ;
      - envoyer à au moins un automate, au moins une commande dépendant des données collectées et/ou de consignes fournies par l'opérateur ;
      - les calculateurs du module d'interface fonctionnant en redondance asynchrone ;
   - Un premier module de traitement comportant un couple de calculateurs, chaque calculateur du couple de calculateurs étant configuré pour :
      - recevoir de chaque calculateur du module d'interface, les données collectées ;
      - trier les données reçues en fonction de leur instant d'acquisition et éliminer les données reçues en double ;
      - calculer pour chaque instant d'acquisition, les premières informations du groupe d'informations correspondant, à partir des données triées correspondantes ;
      - envoyer à chaque calculateur du dispositif de séparation, chaque première information calculée ;
      - Les calculateurs du premier module de traitement fonctionnant en redondance active ;
   - Un premier module de gestion des postes opérateurs comportant un calculateur pour chaque poste opérateur du premier ensemble de postes opérateurs, chaque calculateur étant configuré pour :
      - recevoir chaque première information calculée ;
      - envoyer au poste opérateur correspondant, chaque première information correspondant au sous-ensemble d'informations demandé ;
      - gérer l'interface graphique du poste opérateur correspondant ;
   - Un premier réseau de communication doublé présentant une première voie et une deuxième voie distincte comprenant un premier module de redondance réparti sur chaque calculateur du premier sous-système, chaque calculateur du premier sous-système étant configuré pour :
      - envoyer au premier module de redondance, chaque message destiné à au moins un autre calculateur du premier sous-système, simultanément sur la première voie et la deuxième voie ;
      - recevoir chaque message qui lui est destiné du premier module de redondance et envoyer un acquittement au premier module de redondance ;
   - le premier module de redondance étant configuré pour :
      - recevoir le message envoyé via la première voie et/ou via la deuxième voie ;
      - effacer le message reçu via la deuxième voie si le message a été reçu via la première voie ;
      - modifier le message reçu en ajoutant une demande d'acquittement ;
      - diffuser vers l'autre calculateur du premier sous-système, le message modifié, simultanément sur la première voie et la deuxième voie ;
- le deuxième sous-système comprenant :
   - Un deuxième module de traitement comportant un couple de calculateurs, chaque calculateur du couple de calculateurs étant configuré pour :
      - recevoir de chaque calculateur du dispositif de séparation, les données collectées et les premières informations calculées ;
      - éliminer les données et les premières informations reçues en double ;
      - calculer pour chaque instant d'acquisition, les deuxièmes informations du groupe d'informations correspondant, à partir des données et des premières informations triées correspondantes ;
      - les calculateurs du deuxième module de traitement fonctionnant en redondance active ;
   - Un deuxième module de gestion des postes opérateurs comportant un calculateur pour chaque poste opérateur du deuxième ensemble de postes opérateurs, chaque calculateur étant configuré pour :
      - recevoir chaque deuxième information calculée ;
      - envoyer au poste opérateur correspondant, chaque deuxième information correspondant au sous-ensemble d'informations demandé ;
      - gérer l'interface graphique du poste opérateur correspondant ;
   - Un deuxième réseau de communication doublé présentant une première voie et une deuxième voie distincte, comprenant un deuxième module de redondance réparti sur chaque calculateur du deuxième sous-système, chaque calculateur du deuxième sous-système étant configuré pour :
      - envoyer au deuxième module de redondance, chaque message destiné à au moins un autre calculateur du deuxième sous-système, simultanément sur la première voie et la deuxième voie ;
      - recevoir chaque message qui lui est destiné du deuxième module de redondance et envoyer un acquittement au deuxième module de redondance ;
   - le deuxième module de redondance étant configuré pour :
      - recevoir le message envoyé via la première voie et/ou via la deuxième voie ;
      - effacer le message reçu via la deuxième voie si le message a été reçu via la première voie ;
      - modifier le message reçu en ajoutant une demande d'acquittement ;
      - diffuser vers l'autre calculateur du deuxième sous-système, le message modifié, simultanément sur la première voie et la deuxième voie.

Grâce à l'invention, le système est séparé en deux sous-systèmes distincts par un dispositif de séparation, le premier sous-système regroupant les fonctionnalités nécessaires à la conduite et le deuxième sous-système regroupant les fonctionnalités d'aide à la conduite moins exigeantes en termes de sûreté, ce qui permet de limiter les informations à gérer par le premier sous-système et ainsi de mettre en œuvre un fonctionnement cyclique pour acquérir et calculer systématiquement à chaque cycle toutes les informations essentielles, tout en restant compatible avec les puissances atteignables par la technologie courante des calculateurs. Ce fonctionnement cyclique permet de garantir à la fois la prédictibilité des temps de réponse et aussi la fiabilité des informations traitées. La séparation des fonctionnalités permet aussi de faciliter la qualification du système en réduisant le volume de travail nécessaire aux démonstrations de sûreté.

Le dispositif de séparation permet d'envoyer toutes les informations acquises et calculées par le premier sous-système vers le deuxième sous-système, et le deuxième sous-système détectant les changements de valeurs pour fonctionner en mode événementiel. Etant unidirectionnel, le dispositif de séparation permet de garantir que les éventuelles défaillances du deuxième sous-système ne nuisent pas au fonctionnement fiable du premier sous-système.

Le couplage des deux sous-systèmes via le dispositif de séparation permet d'avoir une conduite centralisée et assise de chaque opérateur sur un poste opérateur regroupant par juxtaposition des écrans rafraîchis séparément par chacun des deux sous-systèmes.

Au sein du premier sous-système, un couple de calculateurs du module d'interface récupère les données acquises par une unique technologie d'automate et élimine les doublons, ce qui permet le découplage entre la gestion de la redondance de chaque technologie d'automate et la gestion de la redondance par le système selon l'invention. Au niveau du module d'interface, la redondance est assurée par chaque couple de calculateurs fonctionnant en redondance asynchrone, c'est-à-dire que chaque calculateur réalise les mêmes tâches sur les données qui lui sont affectées sans synchronisation avec les autres calculateurs.

Le couple de calculateurs du premier module de traitement récupère les données acquises par chaque couple de calculateurs du module d'interface et les ordonne temporellement en supprimant les doublons, ce qui permet d'assurer la cohérence temporelle et l'unicité des données. Les informations nécessaires à la conduite du processus, appelées premières informations, sont ensuite calculées à partir des données triées et donc cohérentes temporellement.

Le couple de calculateurs du deuxième module de traitement récupère les données acquises et triées et les premières informations calculées par le premier sous-système et supprime les doublons, ce qui permet d'assurer la cohérence temporelle et l'unicité des données et des premières informations. Les informations pour l'aide à la conduite du processus, appelées deuxièmes informations, sont ensuite calculées à partir des données et des premières informations triées et donc cohérentes temporellement.

Au niveau du premier module de traitement et du deuxième module de traitement, la redondance est assurée par le couple de calculateurs fonctionnant en redondance active, c'est-à-dire réalisant les mêmes tâches simultanément et envoyant uniquement les informations calculées par l'un des calculateurs.

Chaque calculateur du premier module de gestion des postes opérateurs récupère les premières informations calculées et envoient au poste opérateur du premier ensemble de postes opérateurs associé les premières informations demandées par l'opérateur et chaque calculateur du deuxième module de gestion des postes opérateurs récupère les deuxièmes informations calculées et envoient au poste opérateur du deuxième ensemble de postes opérateurs associé les deuxièmes informations demandées par l'opérateur. Chaque poste opérateur du premier ensemble de postes opérateurs étant identique et chaque poste opérateur du deuxième ensemble de postes opérateurs étant identique, la redondance est assurée au niveau des postes opérateurs.

Suite à l'affichage des informations demandées, l'opérateur peut fournir une consigne via l'interface graphique d'un poste opérateur du premier ensemble de postes opérateurs pour modifier la conduite du processus industriel. La consigne est transmise à au moins un automate concerné via une commande émise par le couple de calculateurs du module d'interface correspondant.

Lors des communications entre calculateurs, la redondance est assurée par le doublement du premier réseau de communication et du deuxième réseau de communication et la cohérence temporelle est assurée par le premier module de redondance et le deuxième module de redondance utilisant un mécanisme d'acquittement pour assurer la bonne réception simultanée des messages par l'ensemble des calculateurs destinataires.

La cohérence temporelle et l'unicité des données et informations, ainsi que la redondance sont donc assurées en chaque point du système qui répond donc aux exigences de haute disponibilité, de fiabilité et de prédictibilité des temps de réponse.

Outre les caractéristiques qui viennent d'être évoquées dans le paragraphe précédent, le système selon un premier aspect de l'invention peut présenter une ou plusieurs caractéristiques complémentaires parmi les suivantes, considérées individuellement ou selon toutes les combinaisons techniquement possibles.

Selon une variante de réalisation, le premier sous-système comporte en outre une première base de données répartie sur au moins une partie des calculateurs du premier sous-système, configurée pour stocker et gérer les données et les premières informations et/ou le deuxième sous-système comporte en outre une deuxième base de données répartie sur au moins une partie des calculateurs du deuxième sous-système, configurée pour stocker et gérer les données, les premières informations et les deuxièmes informations.

Ainsi, la première base de données répartie sur les calculateurs du premier sous-système et/ou la deuxième base de données répartie sur les calculateurs du deuxième sous-système gère une vue cohérente des données et informations représentatives de l'état du processus industriel, garantissant tout risque d'aléa temporel.

Selon une variante de réalisation compatible avec la variante de réalisation précédente, le deuxième sous-système comporte en outre un module d'instant courant comportant une pluralité de calculateurs, chaque calculateur du module d'instant courant étant configuré pour :
- répliquer au moins une partie des données, des premières informations et des deuxièmes informations du deuxième module de traitement ;
- fournir au deuxième module de gestion des postes opérateurs, les données, les premières informations et les deuxièmes informations répliquées correspondant
à l'instant d'acquisition précédant immédiatement l'instant courant ; les calculateurs du module d'instant courant fonctionnant en redondance fonctionnelle.

Ainsi, les calculateurs du module d'instant courant gèrent les données relatives à l'instant courant et donc les modifications à apporter à l'affichage des postes opérateurs du deuxième ensemble de postes opérateurs en temps réel et décharge ainsi les calculateurs du deuxième module de gestion des postes opérateurs. Au niveau du module d'instant courant, la redondance est assurée par la pluralité de calculateurs fonctionnant en redondance fonctionnelle, c'est-à-dire réalisant les mêmes tâches simultanément.

Selon une variante de réalisation compatible avec les variantes de réalisation précédentes, le deuxième sous-système comporte en outre un module d'archivage comportant une pluralité de calculateurs, chaque calculateur du module d'archivage étant configuré pour :
- répliquer et archiver une partie des données, des premières informations et des deuxièmes informations du deuxième module de traitement ;
- fournir au deuxième module de gestion des postes opérateurs, les données, les premières informations et les deuxièmes informations archivées correspondant à chaque instant d'acquisition précédant l'instant d'acquisition précédant immédiatement l'instant courant ;
les calculateurs du module d'archivage fonctionnant en redondance fonctionnelle.

Ainsi, les calculateurs du module d'archivage gèrent les données à afficher non relatives à l'instant courant, c'est-à-dire les données d'archives, et décharge ainsi les calculateurs du deuxième module de gestion des postes opérateurs. Au niveau du module d'archivage, la redondance est assurée par la pluralité de calculateurs fonctionnant en redondance fonctionnelle.

Un deuxième aspect de l'invention concerne un procédé de conduite d'un processus industriel critique mis en œuvre par le système selon l'invention, comprenant les étapes suivantes réalisées pour chaque cycle d'un ensemble de cycles :
- Pour chaque calculateur de chaque couple de calculateurs du module d'interface, collecte de chaque donnée reçue par chaque automate présentant un modèle d'automate correspondant et élimination de chaque donnée reçue en double, chaque donnée étant associée à un instant d'acquisition précédant un instant courant ;
- Réception par chaque calculateur du premier module de traitement, des données collectées par le module d'interface, tri des données reçues en fonction de leur instant d'acquisition, élimination des données reçues en double et calcul de premières informations d'un groupe d'informations pour chaque instant d'acquisition, à partir des données triées correspondantes et envoi à chaque calculateur du dispositif de séparation, de chaque première information calculée
- Réception par chaque calculateur du premier module de gestion des postes opérateurs, de chaque première information calculée et envoi à chaque poste opérateur du premier ensemble de postes opérateurs, de chaque première information reçue comprise dans un sous-ensemble d'informations demandé par un opérateur ;
- Réception par chaque calculateur du deuxième module de traitement, des données collectées et des premières informations calculées par le premier sous-système, détection des données et premières informations modifiées par rapport au cycle précédent, élimination des données et premières informations reçues en double et calcul de deuxièmes informations du groupe d'informations pour chaque instant d'acquisition, à partir des données et des premières informations détectées correspondantes ;
- Réception par chaque calculateur du deuxième module de gestion des postes opérateurs, de chaque deuxième information calculée et envoi à chaque poste opérateur du deuxième ensemble de postes opérateurs, de chaque deuxième information reçue comprise dans le sous-ensemble d'informations demandé ;
- Affichage des premières informations du sous-ensemble d'informations demandé par chaque poste opérateur du premier ensemble de postes opérateurs et des deuxièmes informations du sous-ensemble d'informations demandé par chaque poste opérateur du deuxième ensemble de postes opérateurs, à l'instant courant ;
- Si l'opérateur fournit une consigne via l'interface graphique d'un poste opérateur du premier ensemble de postes opérateurs, envoi de la consigne au module d'interface ;
- Envoi par le module d'interface d'au moins une commande dépendant des données reçues et/ou de la consigne à au moins un automate ;

chaque étape de réception par un calculateur du premier sous-système comportant un échange d'au moins un message entre le calculateur et un autre calculateur du premier sous-système comportant les sous-étapes suivantes :
   - Envoi simultané sur la première voie et la deuxième voie du premier réseau de communication, du message par l'autre calculateur vers le premier module de redondance ;
   - Réception par le premier module de redondance du message envoyé ;
   - Si le message est reçu via la première voie et via la deuxième voie, effacement par le premier module de redondance, du message reçu via la deuxième voie ;
   - Modification par le premier module de redondance, du message reçu par ajout d'une demande d'acquittement ;
   - Diffusion simultanée sur la première voie et la deuxième voie, du message modifié vers le calculateur par le premier module de redondance ;
   - Réception du message modifié par le calculateur et envoi d'un acquittement au premier module de redondance ;
chaque étape de réception par un calculateur du deuxième sous-système comportant un échange d'au moins un message entre le calculateur et un autre calculateur du deuxième sous-système comportant les sous-étapes suivantes :
   - Envoi simultané sur la première voie et la deuxième voie du deuxième réseau de communication, du message par l'autre calculateur vers le deuxième module de redondance ;
   - Réception par le deuxième module de redondance, du message envoyé ;
   - Si le message est reçu via la première voie et via la deuxième voie, effacement par le deuxième module de redondance, du message reçu via la deuxième voie
   - Modification par le deuxième module de redondance, du message reçu par ajout d'une demande d'acquittement ;
   - Diffusion simultanée sur la première voie et la deuxième voie, du message modifié vers le calculateur par le deuxième module de redondance ;
   - Réception du message modifié par le calculateur et envoi d'un acquittement au deuxième module de redondance.

Selon une variante de réalisation, le procédé selon l'invention comporte en outre les étapes suivantes réalisées par chaque calculateur du module d'instant courant:
- Réplication d'au moins une partie des données, des premières informations et des deuxièmes informations du deuxième module de traitement ;
- Envoi à chaque calculateur du deuxième module de gestion des postes opérateurs, des données, des premières informations et des deuxièmes informations répliquées correspondant à l'instant d'acquisition précédant immédiatement l'instant courant.

Selon une variante de réalisation compatible avec la variante de réalisation précédente, le procédé selon l'invention comporte en outre les étapes suivantes réalisées par chaque calculateur du module d'archivage :
- Réplication et archivage d'au moins une partie des données, des premières informations et des deuxièmes informations du deuxième module de traitement ;
- Envoi à chaque calculateur du deuxième module de gestion des postes opérateurs, des données, des premières informations et des deuxièmes informations archivées correspondant à chaque instant d'acquisition précédant l'instant d'acquisition précédant immédiatement l'instant courant.

Selon une sous-variante de réalisation des variantes de réalisation précédentes, l'étape d'envoi par un calculateur du deuxième sous-système comporte un échange d'au moins un message entre le calculateur et au moins un autre calculateur du deuxième sous-système comportant les sous-étapes suivantes :
- Envoi simultané sur la première voie et la deuxième voie du deuxième réseau de communication, du message par le calculateur vers le deuxième module de redondance ;
- Réception par le deuxième module de redondance, du message envoyé ;
- Si le message est reçu via la première voie et via la deuxième voie, effacement par le deuxième module de redondance, du message reçu via la deuxième voie
- Modification par le deuxième module de redondance, du message reçu par ajout d'une demande d'acquittement ;
- Diffusion simultanée sur la première voie et la deuxième voie, du message modifié vers l'autre calculateur ;
- Réception du message modifié par l'autre calculateur et envoi d'un acquittement au deuxième module de redondance.

Un troisième aspect de l'invention concerne un produit-programme d'ordinateur comprenant des instructions qui, quand le programme est exécuté sur un ordinateur, conduisent celui-ci à mettre en œuvre les étapes du procédé selon l'invention.

Selon une variante de réalisation, le produit-programme d'ordinateur est rédigé en langage ADA.

Ainsi, le produit-programme d'ordinateur est indépendant du matériel des calculateurs sur lesquels il est implémenté.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système selon l'invention.
- La figure 2 montre une représentation schématique d'un premier sous-système du système selon l'invention.
- La figure 3 montre une représentation schématique d'un deuxième sous-système du système selon l'invention.
- La figure 4 est un schéma synoptique illustrant l'enchaînement des étapes d'un procédé selon l'invention.
- La figure 5 montre les données acquises et les informations calculées par le procédé selon l'invention en fonction du temps.
- La figure 6 est un schéma synoptique illustrant l'enchaînement des sous-étapes d'une étape du procédé selon l'invention comportant l'échange d'un message entre un calculateur et au moins un autre calculateur du premier sous-système du système selon l'invention.
- La figure 7 montre une représentation schématique de l'échange d'un message entre un calculateur et au moins un autre calculateur du premier sous-système du système selon l'invention.
- La figure 8 est un schéma synoptique illustrant l'enchaînement des sous-étapes d'une étape du procédé selon l'invention comportant l'échange d'un message entre un calculateur et au moins un autre calculateur du deuxième sous-système du système selon l'invention.
- La figure 9 montre une représentation schématique de l'échange d'un message entre un calculateur et au moins un autre calculateur du deuxième sous-système du système selon l'invention.

### DESCRIPTION DETAILLEE

Sauf précision contraire, un même élément apparaissant sur des figures différentes présente une référence unique.

Un premier aspect de l'invention concerne un système permettant la conduite ou commande d'un processus industriel critique.

On entend par « conduite d'un processus industriel », la méthode utilisée pour régir la marche du processus industriel.

La conduite d'un processus industriel comporte classiquement des fonctionnalités nécessaires à la conduite, regroupant par exemple l'acquisition des données, l'affichage des informations pour la génération d'alarmes et pour la prise de décision, et des fonctionnalités d'aide à la conduite, regroupant par exemple l'affichage des informations pour la supervision ou des séquences de conduite, et l'archivage des données.

Dans le contexte de l'invention, la prédictibilité des temps de réponse et la fiabilité des informations traitées sont garanties pour les fonctionnalités nécessaires à la conduite.

Pour assurer la prédictibilité des temps de réponse, le comportement du système vis-à-vis de son environnement doit être établi au moyen d'un modèle capable de déterminer les temps de réponse quel que soit le scénario.

Pour assurer la fiabilité des informations traitées, le système doit permettre de détecter pour un ensemble d'informations, l'absence de communications ou de traitements pour éviter le risque d'avoir des informations non rafraîchies, ou d'utiliser une information erronée ou absente suite à un aléa temporel non détecté.

Le processus industriel est un processus industriel critique, comme par exemple le processus de gestion de la fourniture d'énergie par un réseau électrique ou par une centrale de production d'énergie.

Le système selon l'invention est à haute disponibilité, c'est-à-dire que les fonctionnalités nécessaires à la conduite et les fonctionnalités d'aide à la conduite sont à haute disponibilité.

On entend par « disponibilité », la propriété d'un système capable d'assurer ses fonctions sans interruption, délai ou dégradation, au moment même où la sollicitation en est faite.

On entend par « système à haute disponibilité », un système capable de répondre aux exigences de disponibilité sur une période ayant une durée supérieure à une dizaine d'années.

Pour obtenir un système à haute disponibilité, le système doit être entièrement redondant, c'est-à-dire disposés de dispositifs ou de fonctions supplémentaires destinés à permettre la reprise de l'exploitation en cas de défaillance ou d'indisponibilité de n'importe quel dispositif ou fonction principal.

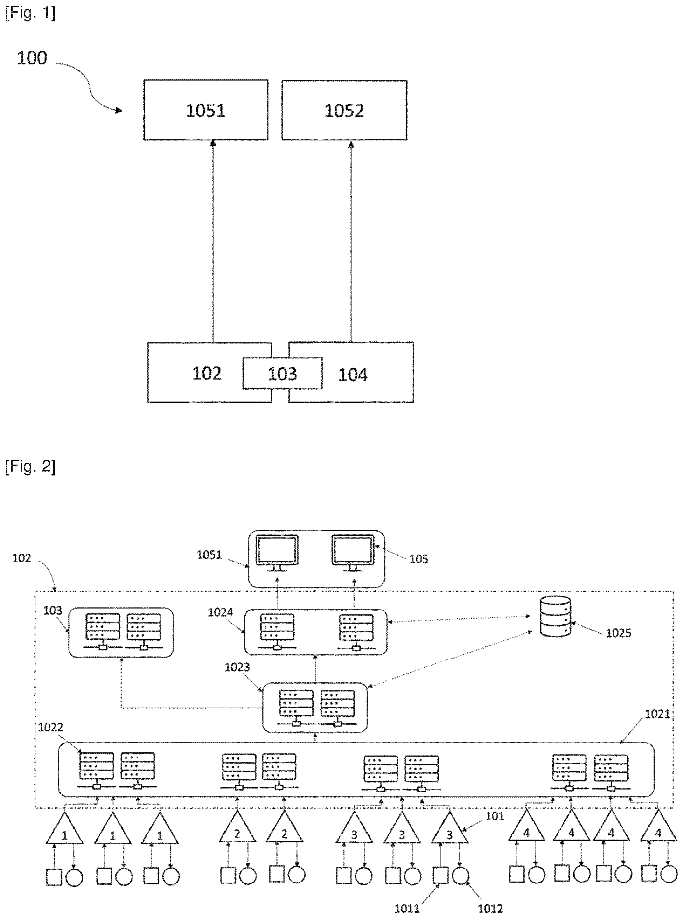

[Fig. 1] La figure 1 montre une représentation schématique du système 100 selon l'invention.

Le système 100 comporte :
- Un premier sous-système 102 pour la conduite du processus industriel, c'est-à-dire réalisant les fonctionnalités nécessaires à la conduite du processus industriel, devant donc répondre aux exigences de prédictibilité des temps de réponse, de fiabilité des informations traitées et de haute disponibilité ;
- Un deuxième sous-système 104 pour l'aide à la conduite du processus industriel, c'est-à-dire réalisant les fonctionnalités d'aide à la conduite du processus industriel, devant donc répondre à l'exigence de haute disponibilité ;
- Un dispositif de séparation unidirectionnel 103, comportant un couple de calculateurs ;
- Un premier ensemble 1051 de postes opérateurs 105 et un deuxième ensemble 1052 de postes opérateurs 105, chaque poste opérateur 105 comprenant une interface graphique.

Pour répondre aux exigences de prédictibilité des temps de réponse et de fiabilité des informations traitées, le premier sous-système 102 présente un fonctionnement cyclique, c'est-à-dire que les processus mis en œuvre par le premier sous-système 102 sont réalisés à chaque cycle et que les données sont transmises à chaque cycle, qu'elles aient été modifiées ou non entre deux cycles successifs.

En revanche, le deuxième sous-système 104 présente un fonctionnement événementiel, c'est-à-dire que les données sont transmises uniquement quand elles ont été modifiées entre deux cycles successifs.

Comme illustré sur la figure 1, le dispositif de séparation 103 est compris à la fois dans le premier sous-système 102 et le deuxième sous-système 104, c'est-à-dire que le couple de calculateurs du dispositif de séparation 103 est considéré comme appartenant au premier sous-système 102 par les autres calculateurs du premier sous-système 102 et considéré comme appartenant au deuxième sous-système 104 par les autres calculateurs du deuxième sous-système 104.

En particulier, le dispositif de séparation 103 est physiquement compris dans le premier sous-système 102, c'est-à-dire que le couple de calculateurs du dispositif de séparation 103 appartient au premier sous-système 102, et héberge une partie logicielle du deuxième sous-système 104.

Le dispositif de séparation 103 est unidirectionnel puisqu'il peut recevoir des messages du premier sous-système 102 et envoyer des messages au deuxième sous-système 104 mais ne peut pas recevoir des messages du deuxième sous-système 104 et envoyer des messages au premier sous-système 102.

Le système 100 peut également comporter un poste d'administration non représenté sur les figures sur lequel est installé un système d'exploitation, et un module d'administration configuré pour gérer la liaison entre les calculateurs du système 100 et le poste d'administration, c'est-à-dire pour faire l'interface entre le système 100 et le poste d'administration.

Le poste d'administration est distinct des postes opérateurs 105.

[Fig. 2] La figure 2 montre une représentation schématique du premier sous-système 102 du système 100 selon l'invention.

Le premier sous-système 102 comporte :
- Un module d'interface 1021 ;
- Un premier module de traitement 1023 comportant un couple de calculateurs 1022 ;
- Un module de gestion des postes opérateurs 1024 comportant un calculateur 1022 par poste opérateur 105 du premier ensemble 1051 de postes opérateur 105.

Le module d'interface 1021 est configuré pour s'interfacer avec une pluralité d'automates 101 programmables industriels à haute disponibilité, présentant chacun un modèle d'automate. Le module d'interface 1021 comporte au moins un couple de calculateurs 1022 pour chaque modèle d'automate.

Sur la figure 2, le premier sous-système 102 s'interface avec douze automates 101 représentés par des triangles, trois automates 101 présentant un modèle 1 d'automate, deux automates 101 présentant un modèle 2 d'automate, trois automates 101 présentant un modèle 3 d'automate et quatre automates 101 présentant un modèle 4 d'automate.

Sur la figure 2, le module d'interface 1021 comporte un couple de calculateurs par modèle d'automate, c'est-à-dire un premier couple de calculateurs 1022 s'interfaçant avec les automates 101 présentant le modèle 1 d'automate, un deuxième couple de calculateurs 1022 s'interfaçant avec les automates 101 présentant le modèle 2 d'automate, un troisième couple de calculateurs 1022 s'interfaçant avec les automates 101 présentant le modèle 3 d'automate et un quatrième couple de calculateurs 1022 s'interfaçant avec les automates 101 présentant le modèle 4 d'automate.

Le module d'interface 1021 pourrait comporter une pluralité de couples de calculateurs 1022 par modèle d'automate.

Chaque automate 101 communique avec au moins un capteur 1011 et au moins un actionneur 1012.

Sur la figure 2, douze capteurs 1011 représentés par des carrés et douze actionneurs 1012 représentés par des cercles sont visibles et chaque automate 101 communique avec un capteur 1011 et un actionneur 1012.

Chaque automate 101 pourrait communiquer avec une pluralité de capteurs 1011 et/ou une pluralité d'actionneurs 1012.

Sur la figure 2, le premier ensemble 1051 de postes opérateurs 105 comporte deux postes opérateurs 105 donc le premier module de gestion des postes opérateurs 1024 comporte deux calculateurs 1022.

Les calculateurs 1022 du module d'interface 1021 fonctionnent en redondance asynchrone, c'est-à-dire que chaque calculateur 1022 d'un couple de calculateurs 1022 réalise les mêmes tâches que l'autre calculateur 1022 du couple de calculateurs 1022 sans synchronisation entre eux et que chaque couple de calculateurs 1022 réalise les mêmes tâches que les autres couples de calculateurs 1022 sans synchronisation entre eux.

Le couple de calculateurs 1022 du premier module de traitement 1023 fonctionne en redondance active, c'est-à-dire que chaque calculateur 1022 réalise les mêmes tâches que l'autre calculateur 1022 en totale synchronisation mais seulement l'un des deux calculateurs 1022 communique des résultats au reste du système 100.

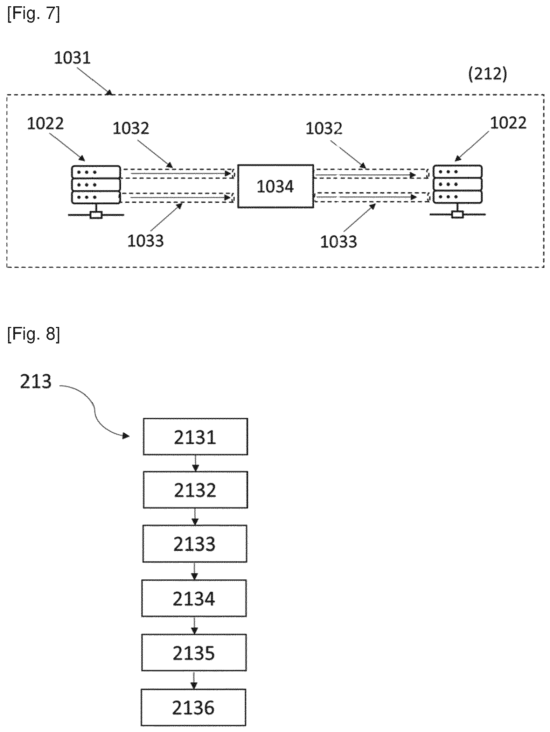

[Fig. 7] La figure 7 montre une représentation schématique du fonctionnement des communications entre calculateurs 1022 au sein du premier sous-système 102.

Le premier sous-système 102 comporte un premier réseau de communication 1031 doublé présentant une première voie 1032 et une deuxième voie 1033 indépendantes l'une de l'autre et comprenant un premier module de redondance 1034 réparti sur les calculateurs 1022 du premier sous-système 102.

Le premier réseau de communication 1031 est par exemple un réseau Ethernet doublé.

Le premier sous-système 102 peut également comporter une première base de données 1025 répartie sur au moins une partie des calculateurs 1022 du premier sous-système 102.

Sur la figure 2, la première base de données 1025 est répartie sur les calculateurs 1022 du premier module de traitement 1023 et sur les calculateurs 1022 du premier module de gestion des postes opérateurs 1024 mais la première base de données 1025 pourrait également être répartie sur d'autres calculateurs 1022, par exemple sur les calculateurs 1022 du module d'interface 1021.

La première base de données 1025 peut également être répartie sur l'ensemble des calculateurs 1022 du premier sous-système 102.

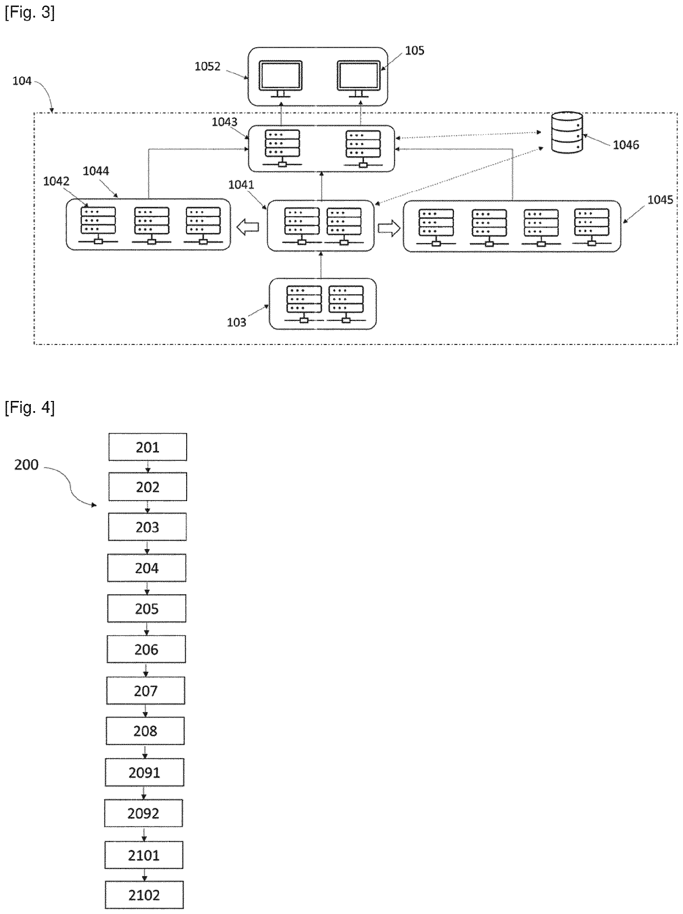

[Fig. 3] La figure 3 montre une représentation schématique du deuxième sous-système 104 du système 100 selon l'invention.

Le deuxième sous-système 104 comporte :
- Un deuxième module de traitement 1041 comportant un couple de calculateurs 1042 ;
- Un deuxième module de gestion des postes opérateurs 1043 comportant un calculateur 1042 par poste opérateur 105 du deuxième ensemble 1052 de postes opérateurs 105.

Sur la figure 3, le deuxième ensemble 1052 de postes opérateurs 105 comporte deux postes opérateurs 105 donc le deuxième module de gestion des postes opérateurs 1043 comporte deux calculateurs 1042.

Le couple de calculateurs 1042 du deuxième module de traitement 1041 fonctionne en redondance active.

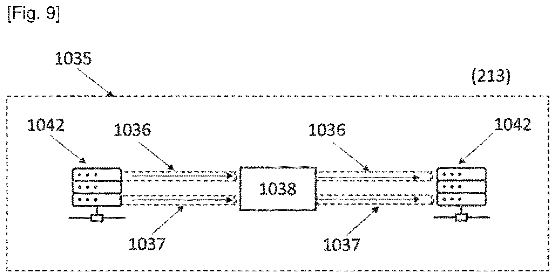

[Fig. 9] La figure 9 montre une représentation schématique du fonctionnement des communications entre calculateurs 1042 au sein du deuxième sous-système 104.

Le deuxième sous-système 104 comporte un deuxième réseau de communication 1035 doublé présentant une première voie 1036 et une deuxième voie 1037 indépendantes l'une de l'autre et comprenant un deuxième module de redondance 1038 réparti sur les calculateurs 1042 du deuxième sous-système 104.

Le deuxième réseau de communication 1035 est par exemple un réseau Ethernet doublé.

Le deuxième sous-système 104 peut également comporter :
- Une deuxième base de données 1046 répartie sur au moins une partie des calculateurs 1042 du deuxième sous-système 104 ;
- Un module d'instant courant 1044 comportant une pluralité de calculateurs 1042 ;
- Un module d'archivage 1045 comportant une pluralité de calculateurs 1042.

Sur la figure 3, la deuxième base de données 1046 est répartie sur les calculateurs 1042 du deuxième module de traitement 1041 et sur les calculateurs 1042 du deuxième module de gestion des postes opérateurs 1043 mais la deuxième base de données 1046 pourrait également être répartie sur d'autres calculateurs 1042.

La deuxième base de données 1046 peut également être répartie sur l'ensemble des calculateurs 1042 du deuxième sous-système 104.

La deuxième base de données 1046 peut également être répartie sur les calculateurs 1042 du module d'instant courant 1044 et/ou sur les calculateurs 1042 du module d'archivage 1045.

Les calculateurs 1042 du module d'instant courant 1044 fonctionnent en redondance fonctionnelle, c'est-à-dire que les tâches sont effectuées simultanément par chaque calculateur 1042 du module d'instant courant 1044.

Les calculateurs 1042 du module d'archivage 1045 fonctionnent en redondance fonctionnelle.

Sur la figure 3, le module d'instant courant 1044 comporte trois calculateurs 1042 mais il pourrait comporter n'importe quel autre nombre de calculateurs 1042.

Sur la figure 3, le module d'archivage 1045 comporte quatre calculateurs 1042 mais il pourrait comporter n'importe quel autre nombre de calculateurs 1042.

Un deuxième aspect de l'invention concerne un procédé de conduite d'un processus industriel critique mis en œuvre par le système 100 selon l'invention.

[Fig. 4] La figure 4 est un schéma synoptique illustrant l'enchaînement des étapes du procédé 200 selon l'invention.

Une première étape 201 du procédé 200 consiste, pour chaque calculateur 1022 de chaque couple de calculateurs 1022 du module d'interface 1021, à collecter une pluralité de données de chaque automate 101 présentant un même modèle d'automate associé au couple de calculateurs 1022, et à éliminer chaque donnée reçue en double, chaque donnée étant associé à un instant d'acquisition précédant un instant courant.

Le premier sous-système 102 présentant un fonctionnement cyclique, la première étape 201 de collecte de données est réalisée cycliquement, c'est-à-dire à chaque cycle d'un ensemble de cycles.

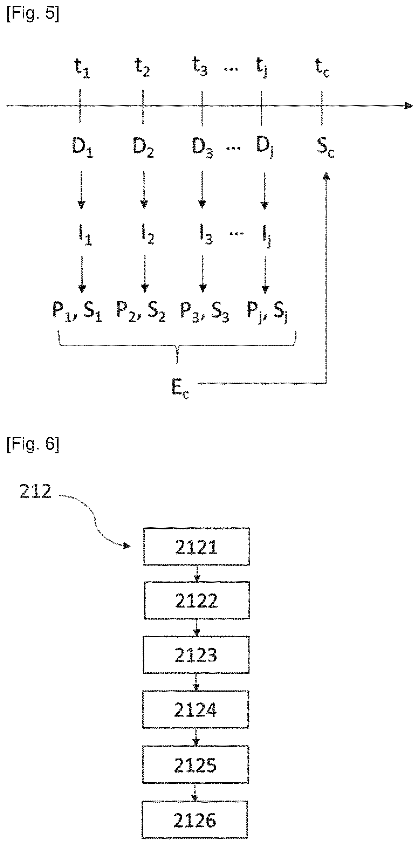

[Fig. 5] La figure 5 montre les données Dᵢ acquises en fonction du temps.

Sur la figure 5, au moins une première donnée D₁ est associée à un premier instant d'acquisition t₁, au moins une deuxième donnée D₂ est associée à un deuxième instant d'acquisition t₂, au moins une troisième donnée D₃ est associée à un troisième instant d'acquisition t₃ et au moins une j-ème donnée Dⱼ est associée à un j-ème instant d'acquisition tᵢ, le j-ème instant d'acquisition tⱼ étant le dernier instant d'acquisition précédant l'instant courant t_{c}.

L'intervalle de temps entre deux instants d'acquisition successifs peut être fixe ou variable.

Par exemple, un premier automate 101 reçoit la première donnée D₁ et la troisième donnée D₃ et un deuxième automate 101 reçoit la deuxième donnée D₂ et la j-ème donnée Dⱼ. Si le premier automate 101 présente un premier modèle d'automate et que le deuxième automate 101 présente un deuxième modèle d'automate, un premier couple de calculateurs 1022 du module d'interface 1021 collecte la première donnée D₁ et la troisième donnée D₃ et un deuxième couple de calculateurs 1022 du module d'interface 1021 collecte la deuxième donnée D₂ et la j-ème donnée Dⱼ.

En prenant l'exemple de la figure 2, la première étape 201 consiste pour chaque cycle, pour le premier couple de calculateurs 1022 du module d'interface 1021 à collecter les données Dᵢ reçues par chaque automate 101 présentant le modèle 1 d'automate, pour le deuxième couple de calculateurs 1022 du module d'interface 1021 à collecter les données Dᵢ reçues par chaque automate 101 présentant le modèle 2 d'automate, pour le troisième couple de calculateurs 1022 du module d'interface 1021 à collecter les données Dᵢ reçues par chaque automate 101 présentant le modèle 3 d'automate et pour le quatrième couple de calculateurs 1022 du module d'interface 1021 à collecter les données Dᵢ reçues par chaque automate 101 présentant le modèle 4 d'automate.

Chaque calculateur 1022 du module d'interface 1021 collecte par exemple chaque donnée Dᵢ reçue par chaque automate 101 à un instant de collecte suivant immédiatement l'instant d'acquisition tᵢ, c'est-à-dire que la transmission des données Dᵢ est réalisée en temps réel entre chaque automate 101 et chaque calculateur 1022 du module d'interface 1021.

Une deuxième étape 202 du procédé 200 consiste, pour chaque calculateur 1022 du premier module de traitement 1023, à recevoir les données Di collectées par le module d'interface 1021 à la première étape 201, c'est-à-dire à recevoir toutes les données Di collectées par le module d'interface 1021.

En reprenant l'exemple précédent, chaque calculateur 1022 du premier module de traitement 1021 reçoit par exemple la première donnée D₁ et la troisième donnée D₃ du premier couple de calculateurs 1022 et la deuxième donnée D₂ et la j-ème donnée Dⱼ du deuxième couple de calculateurs 1022.

Chaque calculateur 1022 du premier module de traitement 1023 reçoit par exemple chaque donnée Dᵢ collectée à un instant de réception suivant immédiatement l'instant de collecte, c'est-à-dire que la transmission des données Dᵢ est réalisée en temps réel entre chaque calculateur 1022 du premier module de traitement 1023 et chaque calculateur 1022 du module d'interface 1021.

La deuxième étape 202 consiste ensuite, pour chaque calculateur 1022 du premier module de traitement 1023, à trier les données Dᵢ reçues en fonction de leur instant d'acquisition tᵢ, c'est-à-dire à ordonner temporellement les données Dᵢ reçues, puis à éliminer les données Dᵢ reçues en double.

En reprenant l'exemple de la figure 5, chaque calculateur 1022 du premier module de traitement 1023 trie les données Dᵢ reçues dans l'ordre suivant : la première donnée D₁, la deuxième donnée D₂, la troisième donnée D₃ et la j-ème donnée Dⱼ.

La deuxième étape 202 consiste enfin, pour chaque calculateur 1022 du premier module de traitement 1023, à calculer pour chaque instant d'acquisition tᵢ, des premières informations Pᵢ d'un groupe d'informations Iᵢ à partir des données Dᵢ triées correspondantes et à envoyer à chaque calculateur 1022 du dispositif de séparation 103, chaque première information Pᵢ calculée.

Chaque groupe d'information Iᵢ comporte une pluralité d'informations Iᵢ dépendant chacune d'au moins une donnée Dᵢ acquise à l'instant d'acquisition tᵢ. Par exemple, une information Iᵢ peut dépendre d'une donnée acquise à l'instant d'acquisition tᵢ et de la même donnée acquise à l'instant d'acquisition tᵢ₋₁ précédant immédiatement l'instant d'acquisition tᵢ.

Chaque groupe d'information Iᵢ comporte une pluralité de premières informations Pᵢ pour la conduite du processus industriel et une pluralité de deuxièmes informations Si pour l'aide à la conduite du processus industriel.

En prenant l'exemple de la figure 5, la deuxième étape 202 consiste à calculer les premières informations P₁ d'un premier groupe d'informations I₁ pour le premier instant d'acquisition t₁, les premières informations P₂ d'un deuxième groupe d'informations I₂ pour le deuxième instant d'acquisition t₂, les premières informations P₃ d'un troisième groupe d'informations I₃ pour le troisième instant d'acquisition t₃ et les premières informations Pⱼ d'un j-ème groupe d'informations Iⱼ pour le j-ème instant d'acquisition tⱼ.

Le premier sous-système 102 présentant un fonctionnement cyclique, la deuxième étape 202 de réception et de tri des données Dᵢ collectées, et de calcul et d'envoi des premières informations Pᵢ est réalisée cycliquement, c'est-à-dire qu'à chaque cycle, les données Dᵢ sont reçues et triées et les premières informations Pᵢ sont calculées et envoyées au dispositif de séparation 103.

Une troisième étape 203 du procédé 200 consiste, pour chaque calculateur 1022 du premier module de gestion des postes opérateurs 1024, à recevoir chaque première information Pᵢ calculée à la deuxième étape 202.

En prenant l'exemple de la figure 5, la troisième étape 203 consiste pour chaque calculateur 1022 du premier module de gestion des postes opérateurs 1024, à recevoir les premières informations P₁ du premier groupe d'informations I₁, les premières informations P₂ du deuxième groupe d'informations I₂, les premières informations P₃ du troisième groupe d'informations I₃ et les premières informations Pⱼ du j-ème groupe d'informations Iⱼ.

Chaque calculateur 1022 du premier module de gestion des postes opérateurs 1024 reçoit par exemple les premières informations Pᵢ calculées à un instant de réception suivant immédiatement un instant de calcul des premières informations Pᵢ, c'est-à-dire que la transmission des premières informations Pᵢ est réalisée en temps réel entre chaque calculateur 1022 du premier module de traitement 1023 et chaque calculateur 1022 du premier module de gestion des postes opérateurs 1024.

La troisième étape 203 du procédé 200 consiste ensuite, pour chaque calculateur 1022 du premier module de gestion des postes opérateurs 1024, à envoyer au poste opérateur 105 correspondant du premier ensemble 1051 de postes opérateurs 105, chaque première information Pᵢ reçue comprise dans un sous-ensemble d'informations S_{c} demandé par un opérateur.

Le sous-ensemble d'informations S_{c} comprend au moins une partie des informations Iᵢ comprises dans un ensemble d'informations E_{c} comprenant chaque groupe d'informations Iᵢ calculé.

Chaque calculateur 1022 du premier module de gestion des postes opérateurs 1024 envoie par exemple chaque première information Pᵢ à un instant d'envoi suivant immédiatement l'instant de réception de la première information Pᵢ, c'est-à-dire que la transmission des premières informations Pᵢ est réalisée en temps réel entre chaque calculateur 1022 du premier module de gestion des postes opérateurs 1024 et chaque poste opérateur 105.

Le premier sous-système 102 présentant un fonctionnement cyclique, la troisième étape 203 de réception et d'envoi des premières informations Pᵢ calculées comprises dans l'ensemble d'informations E_{c} est réalisée cycliquement, c'est-à-dire qu'à chaque cycle, les premières informations Pᵢ sont reçues et envoyées aux postes opérateurs 105 du premier ensemble 1051 de postes opérateurs 105.

Une quatrième étape 204 du procédé 200 consiste, pour chaque calculateur 1042 du deuxième module de traitement 1041, à recevoir les données Dᵢ collectées et des premières informations Pᵢ calculées par le premier module de traitement 1023 à la deuxième étape 202 de chaque calculateur 1022 du dispositif de séparation 103 et à détecter les données Dᵢ collectées et les premières informations Pᵢ calculées par chaque calculateur 1022 du premier module de traitement 1023 modifiées entre deux cycles successifs, ce qui correspond à un fonctionnement événementiel.

En prenant l'exemple de la figure 5, la quatrième étape 204 consiste à chaque cycle, pour chaque calculateur 1042 du deuxième module de traitement 1041, à recevoir la première donnée D₁ et les premières informations P₁ du premier groupe d'informations I₁, la deuxième donnée D₂ et les premières informations P₂ du deuxième groupe d'informations I₂, la troisième donnée D₃ et les premières informations P₃ du troisième groupe d'informations I₃ et la j-ème donnée Dⱼ et les premières informations Pⱼ du j-ème groupe d'informations Iⱼ, et à détecter parmi les données Dᵢ et les premières informations Pᵢ reçues, celles qui ont été modifiées par rapport au cycle précédent.

Chaque calculateur 1042 du deuxième module de traitement 1041 reçoit par exemple chaque donnée Dᵢ collectée et chaque première information Pᵢ calculée à un instant de réception suivant immédiatement un instant de calcul des premières informations Pᵢ, c'est-à-dire que la transmission des données Dᵢ est réalisée en temps réel entre chaque calculateur 1022 du premier module de traitement 1023 et chaque calculateur 1042 du deuxième module de traitement 1041.

La quatrième étape 204 consiste ensuite à éliminer les données Dᵢ et les premières informations Pᵢ reçues en double.

La quatrième étape 204 consiste enfin, pour chaque calculateur 1042 du deuxième module de traitement 1041, à calculer pour chaque instant d'acquisition tᵢ, les deuxièmes informations Si du groupe d'informations Iᵢ correspondant, à partir des données Dᵢ et des premières informations Pᵢ reçues correspondantes.

En prenant l'exemple de la figure 5, la quatrième étape 204 consiste à calculer les deuxièmes informations S₁ du premier groupe d'informations I₁ pour le premier instant d'acquisition t₁, les deuxièmes informations S₂ du deuxième groupe d'informations I₂ pour le deuxième instant d'acquisition t₂, les deuxièmes informations S₃ du troisième groupe d'informations I₃ pour le troisième instant d'acquisition t₃ et les deuxièmes informations Sⱼ du j-ème groupe d'informations Iⱼ pour le j-ème instant d'acquisition tⱼ.

Le deuxième sous-système 104 présentant un fonctionnement événementiel, à chaque cycle, lors de la quatrième étape 204, seules les deuxièmes informations Si dépendant d'au moins une donnée Dᵢ et/ou d'au moins une première information Pᵢ détectée, c'est-à-dire modifiée par rapport au cycle précédent, sont calculées.

Une cinquième étape 205 du procédé 200 consiste, pour chaque calculateur 1042 du deuxième module de gestion des postes opérateurs 1043, à recevoir chaque deuxième information Si calculée à la quatrième étape 204.

En prenant l'exemple de la figure 5, la cinquième étape 205 consiste pour chaque calculateur 1042 du deuxième module de gestion des postes opérateurs 1043, à recevoir les deuxièmes informations S₁ du premier groupe d'informations I1, les deuxièmes informations S₂ du deuxième groupe d'informations I2, les deuxièmes informations S₃ du troisième groupe d'informations I₃ et les deuxièmes informations Sⱼ du j-ème groupe d'informations Iⱼ.

Chaque calculateur 1042 du deuxième module de gestion des postes opérateurs 1043 reçoit par exemple chaque deuxième information Si calculée à un instant de réception suivant immédiatement un instant de calcul des deuxièmes informations Si, c'est-à-dire que la transmission des deuxièmes informations Si est réalisée en temps réel entre chaque calculateur 1042 du deuxième module de traitement 1041 et chaque calculateur 1042 du deuxième module de gestion des postes opérateurs 1043.

La cinquième étape 205 du procédé 200 consiste ensuite, pour chaque calculateur 1042 du deuxième module de gestion des postes opérateurs 1043, à envoyer au poste opérateur 105 correspondant du deuxième ensemble 1052 de postes opérateurs 105, chaque deuxième information Si reçue comprise dans le sous-ensemble d'informations S_{c} demandé.

Chaque calculateur 1042 du deuxième module de gestion des postes opérateurs 1043 envoie par exemple chaque deuxième information Si à un instant d'envoi suivant immédiatement l'instant de réception de la deuxième information Si, c'est-à-dire que la transmission des deuxièmes informations Si est réalisée en temps réel entre chaque calculateur 1042 du deuxième module de gestion des postes opérateurs 1043 et chaque poste opérateur 105.

Le deuxième sous-système 104 présentant un fonctionnement événementiel, à chaque cycle, lors de la cinquième étape 205, seules les deuxièmes informations Si calculées à la quatrième étape 204 sont reçues et envoyées aux postes opérateurs 105 du deuxième ensemble 1052 de postes opérateurs 105, c'est-à-dire que seules les deuxièmes informations Si dépendant d'au moins une donnée Dᵢ et/ou d'au moins une première information Pᵢ détectée à la quatrième étape 204 sont reçues et envoyées aux postes opérateurs 105 du deuxième ensemble 1052 de postes opérateurs 105.

Une sixième étape 206 du procédé 200 consiste, pour chaque poste opérateur 105 du premier ensemble 1051 de postes opérateurs 105, à afficher les premières informations Pᵢ comprises dans le sous-ensemble d'informations S_{c} demandé à l'instant courant t_{c} et pour chaque poste opérateur 105 du deuxième ensemble 1052 de postes opérateurs 105, à afficher les deuxièmes informations Si comprises dans le sous-ensemble d'informations S_{c} demandé à l'instant courant t_{c}.

Une septième étape 207 du procédé 200 est réalisée si l'opérateur fournit une consigne via l'interface graphique d'un poste opérateur 105 donné du premier ensemble 1051 de postes opérateurs 105.

La septième étape 207 consiste, pour le module d'interface 1021, à recevoir la consigne.

Lors de la septième étape 207, le poste opérateur 105 donné envoie la consigne au premier module de gestion des postes opérateurs 1024, qui envoie la consigne au premier module de traitement 1023, qui envoie la consigne au module d'interface 1021.

Une huitième étape 208 du procédé 200 consiste, pour le module d'interface 1021, à envoyer au moins une commande dépendant des données Dᵢ reçues à la première étape 201 et/ou de la consigne reçue à la septième étape 207 à au moins un automate 101.

L'automate 101 peut alors envoyer la commande à au moins un actionneur 1012 correspondant.

La commande peut donc dépendre des informations Iᵢ calculées à partir des données Dᵢ reçues.

Par exemple, si le module d'interface 1021 reçoit à la septième étape 207 une consigne demandant d'éteindre un actionneur 1012 i, la huitième étape 208 consiste pour le module d'interface 1021, à envoyer une commande à l'automate 101 j configuré pour envoyer des commandes à l'actionneur 1012 i.

Dans le cas où le deuxième sous-système 104 comporte le module d'instant courant 1044, le procédé 200 comporte une neuvième étape 2091 et une dixième étape 2092 réalisées par chaque calculateur 1042 du module d'instant courant 1044.

La neuvième étape 2091 consiste à répliquer au moins une partie des données Dᵢ, des premières informations Pᵢ et des deuxièmes informations Si du deuxième module de traitement 1041, c'est-à-dire une partie des données Dᵢ, des premières informations Pᵢ et des deuxièmes informations Si du deuxième module de traitement 1041 ou l'ensemble des données Dᵢ, des premières informations Pᵢ et des deuxièmes informations Si du deuxième module de traitement 1041.

On entend par « réplication », le partage d'informations pour assurer la cohérence de données entre plusieurs sources de données redondantes.

La partie des données Dᵢ, des premières informations Pᵢ et des deuxièmes informations Si du deuxième module de traitement 1041 répliquée comporte par exemple les données Dᵢ, les premières informations Pᵢ et les deuxièmes informations Si relatives à l'instant d'acquisition tⱼ précédant immédiatement l'instant courant t_{c}.

La dixième étape 2092 consiste à envoyer à chaque calculateur 1042 du deuxième module de gestion des postes opérateurs 1043, les données Dᵢ, les premières informations Pᵢ et les deuxièmes informations Si répliquées à la neuvième étape 2091 relatives à l'instant d'acquisition tⱼ précédant immédiatement l'instant courant t_{c}.

Dans le cas où le deuxième sous-système 104 comporte le module d'archivage 1045, le procédé 200 comporte une onzième étape 2101 et une douzième étape 2102 réalisées par chaque calculateur 1042 du module d'archivage 1045.

La onzième étape 2101 consiste à répliquer et à archiver une partie des données Dᵢ, des premières informations Pᵢ et des deuxièmes informations Si du deuxième module de traitement 1041, c'est-à-dire une partie des données Dᵢ, des premières informations Pᵢ et des deuxièmes informations Si du deuxième module de traitement 1041 ou l'ensemble des données Dᵢ, des premières informations Pᵢ et des deuxièmes informations Si du deuxième module de traitement 1041.

La partie des données Dᵢ, des premières informations Pᵢ et des deuxièmes informations Si du deuxième module de traitement 1041 archivée comporte par exemple les données Dᵢ, les premières informations Pᵢ et les deuxièmes informations Si relatives à chaque instant d'acquisition tᵢ précédant l'instant d'acquisition tⱼ précédant immédiatement l'instant courant t_{c}.

La douzième étape 2102 consiste à envoyer à chaque calculateur 1042 du deuxième module de gestion des postes opérateurs 1043 les données Dᵢ, les premières informations Pᵢ et les deuxièmes informations Si archivées à la onzième étape 2101 relatives à chaque instant d'acquisition tᵢ précédant l'instant d'acquisition tⱼ précédant immédiatement l'instant courant t_{c}.

Sur la figure 5, l'instant d'acquisition tᵢ précédant immédiatement l'instant courant t_{c} est le j-ème instant d'acquisition tⱼ donc la douzième étape 2102 consiste à envoyer les données Dᵢ, les premières informations Pᵢ et les deuxièmes informations Si relatives au premier instant d'acquisition t₁, au deuxième instant d'acquisition t₂, au troisième instant d'acquisition t₃ et de manière générale à tous les autres instants d'acquisition tᵢ précédant le j-ème instant d'acquisition tⱼ.

Dans le procédé 200, chaque étape de réception par un calculateur 1022 du premier sous-système 102, c'est-à-dire la deuxième étape 202 et la troisième étape 203 comporte un échange 212 d'au moins un message entre un calculateur 1022 expéditeur et au moins un autre calculateur 1022 destinataire.

[Fig. 6] La figure 6 est un schéma synoptique illustrant l'enchaînement des sous-étapes d'un échange 212.

Une première sous-étape 2121 de l'échange 212 consiste pour le calculateur 1022 expéditeur, à envoyer le message simultanément sur la première voie 1032 et la deuxième voie 1033 du premier réseau de communication 1031 à destination du premier module de redondance 1034.

Une deuxième sous-étape 2122 de l'échange 212 consiste pour le premier module de redondance 1034, à recevoir le message envoyé.

Si à la deuxième sous-étape 2122, le premier module de redondance 1034 reçoit le message via la première voie 1032 et via la deuxième voie 1033 du premier réseau de communication 1031, et donc reçoit le message en double, une troisième sous-étape 2123 de l'échange 212 consiste pour le premier module de redondance 1034, à effacer le message reçu via la deuxième voie 1033.

Une quatrième sous-étape 2124 de l'échange 212 consiste pour le premier module de redondance 1034, à modifier le message reçu par ajout d'une demande d'acquittement.

Une cinquième sous-étape 2125 de l'échange 212 consiste pour le premier module de redondance 1034, à diffuser le message modifié simultanément sur la première voie 1032 et la deuxième voie 1033 du premier réseau de communication 1031 à destination du ou des calculateurs 1022 destinataires.

Une sixième sous-étape 2126 de l'échange 212 consiste pour chaque calculateur 1022 destinataire, à recevoir le message modifié et à envoyer un acquittement au premier module de redondance 1034.

Dans le procédé 200, la cinquième étape 205 de réception par un calculateur 1042 du deuxième sous-système 104 et chaque étape d'envoi par un calculateur 1042 du deuxième sous-système 104, c'est-à-dire la dixième étape 2092 et la douzième étape 2102, comporte un échange 213 d'au moins un message entre un calculateur 1042 expéditeur et au moins un autre calculateur 1042 destinataire.

[Fig. 8] La figure 8 est un schéma synoptique illustrant l'enchaînement des sous-étapes d'un échange 213.

Une première sous-étape 2131 de l'échange 213 consiste pour le calculateur 1042 expéditeur, à envoyer le message simultanément sur la première voie 1036 et la deuxième voie 1037 du deuxième réseau de communication 1035 à destination du deuxième module de redondance 1038.

Une deuxième sous-étape 2132 de l'échange 213 consiste pour le deuxième module de redondance 1038, à recevoir le message envoyé.

Si à la deuxième sous-étape 2132, le deuxième module de redondance 1038 reçoit le message via la première voie 1036 et via la deuxième voie 1037 du deuxième réseau de communication 1035, et donc reçoit le message en double, une troisième sous-étape 2133 de l'échange 213 consiste pour le deuxième module de redondance 1038, à effacer le message reçu via la deuxième voie 1037.

Une quatrième sous-étape 2134 de l'échange 213 consiste pour le deuxième module de redondance 1038, à modifier le message reçu par ajout d'une demande d'acquittement.

Une cinquième sous-étape 2135 de l'échange 213 consiste pour le deuxième module de redondance 1038, à diffuser le message modifié simultanément sur la première voie 1036 et la deuxième voie 1037 du deuxième réseau de communication 1035 à destination du ou des calculateurs 1042 destinataires.

Une sixième sous-étape 2136 de l'échange 213 consiste pour chaque calculateur 1042 destinataire, à recevoir le message modifié et à envoyer un acquittement au deuxième module de redondance 1038.

La première base de données 1025 est configurée pour stocker et gérer les données Dᵢ et les premières informations Pᵢ utilisées par les calculateurs 1022 sur laquelle elle est répartie.

La deuxième base de données 1046 est configurée pour stocker et gérer les données Dᵢ, les premières informations Pᵢ et les deuxièmes informations Si utilisées par les calculateurs 1042 sur laquelle elle est répartie.

## Revendications

1. Système (100) pour la conduite et l'aide à la conduite d'un processus industriel critique comprenant :
- Un premier ensemble (1051) de postes opérateurs (105) comprenant chacun une interface graphique et étant chacun configuré pour :
∘ recevoir des consignes d'un opérateur via l'interface graphique ;
∘ afficher à un instant courant (t_{c}) et sur demande de l'opérateur, des premières informations (Pᵢ) d'un sous-ensemble d'informations (S_{c}), le sous-ensemble d'informations (S_{c}) étant compris dans un ensemble d'informations (E_{c}) comprenant un groupe d'informations (Iᵢ) pour chaque instant d'acquisition (tᵢ) d'une pluralité d'instants d'acquisition (tᵢ) précédant l'instant courant (t_{c}), chaque groupe d'informations (Iᵢ) comprenant des premières informations (Pᵢ) pour la conduite du processus industriel et des deuxièmes informations (Sᵢ) pour l'aide à la conduite du processus industriel ;
- Un deuxième ensemble (1052) de postes opérateurs (105) chacun configuré pour afficher à l'instant courant (t_{c}) et sur demande de l'opérateur, les deuxièmes informations (Sᵢ) du sous-ensemble d'informations (S_{c}) ;
- Un premier sous-système (102) pour la conduite du processus industriel présentant un fonctionnement cyclique, un deuxième sous-système (104) pour l'aide à la conduite du processus industriel présentant un fonctionnement événementiel et un dispositif de séparation (103) unidirectionnel compris dans le premier sous-système (102) et dans le deuxième sous-système (104), comportant un couple de calculateurs (1022), le premier sous-système (102) comprenant :
∘ Un module d'interface (1021) configuré pour collecter, d'une pluralité d'automates (101) programmables industriels présentant chacun un modèle d'automate, des données (Dᵢ), chaque donnée (Dᵢ) étant associée à un instant d'acquisition (tᵢ) de la pluralité d'instants d'acquisition (tᵢ), le module d'interface (1021) comportant au moins un couple de calculateurs (1022) pour chaque modèle d'automate, chaque calculateur (1022) du couple de calculateurs (1022) étant configuré pour :
• collecter chaque donnée (Dᵢ) reçue par chaque automate (101) présentant le modèle d'automate et éliminer chaque donnée (Dᵢ) reçue en double ;
• envoyer à au moins un automate (101), au moins une commande dépendant des données (Dᵢ) collectées et/ou de consignes fournies par l'opérateur ;
• les calculateurs (1022) du module d'interface (1021) fonctionnant en redondance asynchrone ;
∘ Un premier module de traitement (1023) comportant un couple de calculateurs (1022), chaque calculateur (1022) du couple de calculateurs (1022) étant configuré pour :
• recevoir de chaque calculateur (1022) du module d'interface (1021), les données (Dᵢ) collectées ;
• trier les données (Dᵢ) reçues en fonction de leur instant d'acquisition (tᵢ) et éliminer les données (Dᵢ) reçues en double ;
• calculer pour chaque instant d'acquisition (tᵢ), les premières informations (Pᵢ) du groupe d'informations (Iᵢ) correspondant, à partir des données (Dᵢ) triées correspondantes ;
• envoyer à chaque calculateur (1022) du dispositif de séparation (103), chaque première information (Pᵢ) calculée ;
• les calculateurs (1022) du premier module de traitement (1023) fonctionnant en redondance active ;
∘ Un premier module de gestion des postes opérateurs (1024) comportant un calculateur (1022) pour chaque poste opérateur (105) du premier ensemble (1051) de postes opérateurs (105), chaque calculateur (1022) étant configuré pour :
• recevoir chaque première information (Pᵢ) calculée ;
• envoyer au poste opérateur (105) correspondant, chaque première information (Pᵢ) correspondant au sous-ensemble d'informations (S_{c}) demandé ;
• gérer l'interface graphique du poste opérateur (105) correspondant ;
∘ Un premier réseau de communication (1031) doublé présentant une première voie (1032) et une deuxième voie (1033) distinct, comprenant un premier module de redondance (1034) réparti sur chaque calculateur (1022) du premier sous-système (102), chaque calculateur (1022) du premier sous-système (102) étant configuré pour :
• envoyer au premier module de redondance (1034), chaque message destiné à au moins un autre calculateur (1022) du premier sous-système (102), simultanément sur la première voie (1032) et la deuxième voie (1033) ;
• recevoir chaque message qui lui est destiné du premier module de redondance (1034) et envoyer un acquittement au premier module de redondance (1034) ;
• le premier module de redondance (1034) étant configuré pour :
a. recevoir le message envoyé via la première voie (1032) et/ou via la deuxième voie (1033) ;
b. effacer le message reçu via la deuxième voie (1033) si le message a été reçu via la première voie (1032) ;
c. modifier le message reçu en ajoutant une demande d'acquittement ;
d. diffuser vers l'autre calculateur (1022) du premier sous-système (102), le message modifié, simultanément sur la première voie (1032) et la deuxième voie (1033) ;
- le deuxième sous-système (104) comprenant :
∘ Un deuxième module de traitement (1041) comportant un couple de calculateurs (1042), chaque calculateur (1042) du couple de calculateurs (1042) étant configuré pour :
• recevoir de chaque calculateur (1022) du dispositif de séparation (103), les données (Dᵢ) collectées et les premières informations (Pᵢ) calculées ;
• éliminer les données (Dᵢ) et les premières informations (Pᵢ) reçues en double ;
• calculer pour chaque instant d'acquisition (tᵢ), les deuxièmes informations (Sᵢ) du groupe d'informations (Iᵢ) correspondant, à partir des données (Dᵢ) et des premières informations (Pᵢ) triées correspondantes ;
• les calculateurs (1042) du deuxième module de traitement (1041) fonctionnant en redondance active ;
∘ Un deuxième module de gestion des postes opérateurs (1043) comportant un calculateur (1042) pour chaque poste opérateur (105) du deuxième ensemble (1052) de postes opérateurs (105), chaque calculateur (1042) étant configuré pour :
• recevoir chaque deuxième information (Sᵢ) calculée ;
• envoyer au poste opérateur (105) correspondant, chaque deuxième information (Sᵢ) correspondant au sous-ensemble d'informations (S_{c}) demandé ;
• gérer l'interface graphique du poste opérateur (105) correspondant ;
∘ Un deuxième réseau de communication (1035) doublé présentant une première voie (1036) et une deuxième voie (1037) distinct, comprenant un deuxième module de redondance (1038) réparti sur chaque calculateur (1022) du deuxième sous-système (104), chaque calculateur (1042) du deuxième sous-système (104) étant configuré pour :
• envoyer au deuxième module de redondance (1038), chaque message destiné à au moins un autre calculateur (1042) du deuxième sous-système (104), simultanément sur la première voie (1036) et la deuxième voie (1037) ;
• recevoir chaque message qui lui est destiné du deuxième module de redondance (1038) et envoyer un acquittement au deuxième module de redondance (1038) ;
• le deuxième module de redondance (1038) étant configuré pour :
a. recevoir le message envoyé via la première voie (1036) et/ou via la deuxième voie (1037) ;
b. effacer le message reçu via la deuxième voie (1037) si le message a été reçu via la première voie (1036) ;
c. modifier le message reçu en ajoutant une demande d'acquittement ;
d. diffuser vers l'autre calculateur (1042) du deuxième sous-système (104), le message modifié, simultanément sur la première voie (1036) et la deuxième voie (1037).

2. Système (100) selon la revendication 1, **caractérisé en ce que** le premier sous-système (102) comporte en outre une première base de données (1025) répartie sur au moins une partie des calculateurs (1022) du premier sous-système (102), configurée pour stocker et gérer les données (Dᵢ) et les premières informations (Pᵢ) et/ou le deuxième sous-système (104) comporte en outre une deuxième base de données (1046) répartie sur au moins une partie des calculateurs (1042) du deuxième sous-système (104), configurée pour stocker et gérer les données (Dᵢ), les premières informations (Pᵢ) et les deuxièmes informations (Sᵢ).

3. Système (100) selon l'une quelconque des revendications précédentes, **caractérisé en ce que** le deuxième sous-système (104) comporte en outre un module d'instant courant (1044) comportant une pluralité de calculateurs (1042), chaque calculateur (1042) du module d'instant courant (1044) étant configuré pour :
- répliquer au moins une partie des données (Dᵢ), des premières informations (Pᵢ) et des deuxièmes informations (Sᵢ) du deuxième module de traitement (1041) ;
- fournir au deuxième module de gestion des postes opérateurs (1043), les données (Dᵢ), les premières informations (Pᵢ) et les deuxièmes informations (Sᵢ) répliquées correspondant à l'instant d'acquisition (tⱼ) précédant immédiatement l'instant courant (t_{c}) ;
les calculateurs (1042) du module d'instant courant (1044) fonctionnant en redondance fonctionnelle.

4. Système (100) selon l'une quelconque des revendications précédentes, **caractérisé en ce que** le deuxième sous-système (104) comporte en outre un module d'archivage (1045) comportant une pluralité de calculateurs (1042), chaque calculateur (1042) du module d'archivage (1045) étant configuré pour :
- répliquer et archiver une partie des données (Dᵢ), des premières informations (Pᵢ) et des deuxièmes informations (Sᵢ) du deuxième module de traitement (1041) ;
- fournir au deuxième module de gestion des postes opérateurs (1043), les données (Dᵢ), les premières informations (Pᵢ) et les deuxièmes informations (Sᵢ) archivées correspondant à chaque instant d'acquisition (tᵢ) précédant l'instant d'acquisition (tⱼ) précédant immédiatement l'instant courant (t_{c}) ;
les calculateurs (1042) du module d'archivage (1045) fonctionnant en redondance fonctionnelle.

5. Procédé (200) de conduite d'un processus industriel critique mis en œuvre par le système (100) selon l'une quelconque des revendications précédentes, comprenant les étapes suivantes réalisées pour chaque cycle d'un ensemble de cycles :
- Pour chaque calculateur (1022) de chaque couple de calculateurs (1022) du module d'interface (1021), collecte de chaque donnée (Dᵢ) reçue par chaque automate (101) présentant un modèle d'automate correspondant et élimination de chaque donnée (Dᵢ) reçue en double, chaque donnée (Dᵢ) étant associée à un instant d'acquisition (tᵢ) précédant un instant courant (t_{c}, 201) ;
- Réception par chaque calculateur (1022) du premier module de traitement (1023), des données (Dᵢ) collectées par le module d'interface (1021), tri des données (Dᵢ) reçues en fonction de leur instant d'acquisition (tᵢ), élimination des données (Dᵢ) reçues en double, calcul de premières informations (Pᵢ) d'un groupe d'informations (Iᵢ) pour chaque instant d'acquisition (tᵢ), à partir des données (Dᵢ) triées correspondantes et envoi à chaque calculateur (1022) du dispositif de séparation (103), de chaque première information (Pᵢ) calculée (202) ;
- Réception par chaque calculateur (1022) du premier module de gestion des postes opérateurs (1024), de chaque première information (Pᵢ) calculée et envoi à chaque poste opérateur (105) du premier ensemble (1051) de postes opérateurs (105), de chaque première information (Pᵢ) reçue comprise dans un sous-ensemble d'informations (S_{c}) demandé par un opérateur (203) ;
- Réception par chaque calculateur (1042) du deuxième module de traitement (1041), des données (Dᵢ) collectées et des premières informations (Pᵢ) calculées par le premier sous-système (102), détection des données (Dᵢ) et premières informations (Pᵢ) modifiées par rapport au cycle précédent, élimination des données (Dᵢ) et premières informations (Pᵢ) reçues en double et calcul de deuxièmes informations (Sᵢ) du groupe d'informations pour chaque instant d'acquisition (tᵢ), à partir des données (Dᵢ) et des premières informations (Pᵢ) détectées correspondantes (204) ;
- Réception par chaque calculateur (1042) du deuxième module de gestion des postes opérateurs (1043), de chaque deuxième information (Sᵢ) calculée et envoi à chaque poste opérateur (105) du deuxième ensemble (1052) de postes opérateurs (105), de chaque deuxième information (Sᵢ) reçue comprise dans le sous-ensemble d'informations (S_{c}) demandé (205) ;
- Affichage des premières informations (Pᵢ) du sous-ensemble d'informations (S_{c}) demandé par chaque poste opérateur (105) du premier ensemble (1051) de postes opérateurs (105) et des deuxièmes informations (Sᵢ) du sous-ensemble d'informations (S_{c}) demandé par chaque poste opérateur (105) du deuxième ensemble (1052) de postes opérateurs (105), à l'instant courant (t_{c}, 206) ;
- Si l'opérateur fournit une consigne via l'interface graphique d'un poste opérateur (105) du premier ensemble (1051) de postes opérateurs (105), envoi de la consigne au module d'interface (1021, 207) ;
- Envoi par le module d'interface (1021) d'au moins une commande dépendant des données (Dᵢ) reçues et/ou de la consigne à au moins un automate (101, 208) ;
chaque étape de réception (202, 203) par un calculateur (1022) du premier sous-système (102) comportant un échange (212) d'au moins un message entre le calculateur (1022) et un autre calculateur (1022) du premier sous-système (102) comportant les sous-étapes suivantes :
- Envoi simultané sur la première voie (1032) et la deuxième voie (1033) du premier réseau de communication (1031), du message par l'autre calculateur (1022) vers le premier module de redondance (1034, 2121) ;
- Réception par le premier module de redondance (1034) du message envoyé (2122) ;
- Si le message est reçu via la première voie (1032) et via la deuxième voie (1033), effacement par le premier module de redondance (1034), du message reçu via la deuxième voie (1033, 2123) ;
- Modification par le premier module de redondance (1034), du message reçu par ajout d'une demande d'acquittement (2124) ;
- Diffusion simultanée sur la première voie (1032) et la deuxième voie (1033), du message modifié vers le calculateur (1022) par le premier module de redondance (1034, 2125) ;
- Réception du message modifié par le calculateur (1022) et envoi d'un acquittement au premier module de redondance (1034, 2126) ;
chaque étape (204, 205) de réception par un calculateur (1042) du deuxième sous-système (104) comportant un échange (213) d'au moins un message entre le calculateur (1042) et un autre calculateur (1042) du deuxième sous-système (104) comportant les sous-étapes suivantes :
- Envoi simultané sur la première voie (1036) et la deuxième voie (1037) du deuxième réseau de communication (1035), du message par l'autre calculateur (1042) vers le deuxième module de redondance (1038, 2131) ;
- Réception par le deuxième module de redondance (1038), du message envoyé (2132) ;
- Si le message est reçu via la première voie (1036) et via la deuxième voie (1037), effacement par le deuxième module de redondance (1038), du message reçu via la deuxième voie (1037, 2133) ;
- Modification par le deuxième module de redondance (1038), du message reçu par ajout d'une demande d'acquittement (2134) ;
- Diffusion simultanée sur la première voie (1036) et la deuxième voie (1037), du message modifié vers le calculateur (1042) par le deuxième module de redondance (1038, 2135) ;
- Réception du message modifié par le calculateur (1042) et envoi d'un acquittement au deuxième module de redondance (1038, 2136).

6. Procédé (200) selon la revendication 5 mis en œuvre par le système (100) comportant le module d'instant courant (1044), **caractérisé en ce qu'**il comporte en outre les étapes suivantes réalisées par chaque calculateur (1042) du module d'instant courant (1044) :
- Réplication d'au moins une partie des données (Dᵢ), des premières informations (Pᵢ) et des deuxièmes informations (Sᵢ) du deuxième module de traitement (1041, 2091) ;
- Envoi à chaque calculateur (1042) du deuxième module de gestion des postes opérateurs (1043), des données (Dᵢ), des premières informations (Pᵢ) et des deuxièmes informations (Sᵢ) répliquées correspondant à l'instant d'acquisition (tⱼ) précédant immédiatement l'instant courant (t_{c}, 2092).

7. Procédé (200) selon l'une quelconque des revendications 5 ou 6 mis en œuvre par le système (100) comportant le module d'archivage (1045), **caractérisé en ce qu'**il comporte en outre les étapes suivantes réalisées par chaque calculateur (1042) du module d'archivage (1045) :
- Réplication et archivage d'au moins une partie des données (Dᵢ), des premières informations (Pᵢ) et des deuxièmes informations (Sᵢ) du deuxième module de traitement (1041, 2101) ;
- Envoi à chaque calculateur (1042) du deuxième module de gestion des postes opérateurs (1043), des données (Dᵢ), des premières informations (Pᵢ) et des deuxièmes informations (Sᵢ) archivées correspondant à chaque instant d'acquisition (tᵢ) précédant l'instant d'acquisition (tⱼ) précédant immédiatement l'instant courant (t_{c}, 2102).

8. Procédé (200) selon la revendication 6 ou 7, **caractérisé en ce que** l'étape (2092, 2102) d'envoi par un calculateur (1042) du deuxième sous-système (104) comporte un échange (213) d'au moins un message entre le calculateur (1042) et au moins un autre calculateur (1042) du deuxième sous-système (104) comportant les sous-étapes suivantes :
- Envoi simultané sur la première voie (1036) et la deuxième voie (1037 du deuxième réseau de communication (1035), du message par le calculateur (1042) vers le deuxième module de redondance (1038, 2131) ;
- Réception par le deuxième module de redondance (1038), du message envoyé (2132) ;
- Si le message est reçu via la première voie (1036) et via la deuxième voie (1037), effacement par le deuxième module de redondance (1038), du message reçu via la deuxième voie (1037, 2133) ;
- Modification par le deuxième module de redondance (1038), du message reçu par ajout d'une demande d'acquittement (2134) ;
- Diffusion simultanée sur la première voie (1036) et la deuxième voie (1037), du message modifié vers l'autre calculateur (1042, 2135) ;
- Réception du message modifié par l'autre calculateur (1042) et envoi d'un acquittement au deuxième module de redondance (1038, 2136).

9. Produit-programme d'ordinateur comprenant des instructions qui, quand le programme est exécuté sur un ordinateur, conduisent celui-ci à mettre en œuvre les étapes du procédé (200) selon l'une quelconque des revendications 5 à 8.

10. Produit-programme d'ordinateur selon la revendication 9, **caractérisé en ce qu'**il est rédigé en langage ADA.

## Patentansprüche

1. System (100) zur Steuerung und Unterstützung der Steuerung eines kritischen industriellen Prozesses, umfassend:
- Einen ersten Satz (1051) von Bedienerplätzen (105), die jeweils eine grafische Schnittstelle umfassen und jeweils konfiguriert sind zum:
∘ Empfangen von Anweisungen von einem Bediener über die grafische Schnittstelle;
∘ Anzeigen, zu einem aktuellen Zeitpunkt (t_{c}) und auf Anforderung des Bedieners, von ersten Informationen (Pᵢ) einer Teilmenge von Informationen (S_{c}), wobei die Teilmenge von Informationen (S_{c}) in einem Satz von Informationen enthalten ist (E_{c}), umfassend eine Gruppe von Informationen (Iᵢ) für jeden Erfassungszeitpunkt (tᵢ) einer Vielzahl von Erfassungszeitpunkten (tᵢ) vor dem aktuellen Zeitpunkt (t_{c}), wobei jede Gruppe von Informationen (Iᵢ) erste Informationen (Pᵢ) für die Steuerung des industriellen Prozesses und zweite Informationen (Sᵢ) zur Unterstützung der Steuerung des industriellen Prozesses umfasst;
- Einen zweiten Satz (1052) von Bedienerplätzen (105), die jeweils dazu konfiguriert sind, zum aktuellen Zeitpunkt (t_{c}) und auf Anforderung des Bedieners die zweiten Informationen (Sᵢ) der Teilmenge von Informationen (S_{c}) anzuzeigen;
- Ein erstes Subsystem (102) zur Steuerung des industriellen Prozesses mit zyklischem Betrieb, ein zweites Subsystem (104) zur Unterstützung der Steuerung des industriellen Prozesses mit ereignisgesteuertem Betrieb und eine unidirektionale Trennvorrichtung (103), die im ersten Subsystem (102) und im zweiten Subsystem (104) enthalten ist, die ein Paar von Rechnern (1022) umfasst, wobei das erste Subsystem (102) umfasst:
∘ Ein Schnittstellenmodul (1021), das dazu konfiguriert ist, von einer Vielzahl von programmierbaren industriellen Automaten (101), die jeweils ein Automatenmodell aufweisen, Daten (Dᵢ) zu sammeln, wobei jedes Datenelement (Dᵢ) einem Erfassungszeitpunkt (tᵢ) der Vielzahl von Erfassungszeitpunkten (tᵢ) zugeordnet ist, wobei das Schnittstellenmodul (1021) mindestens ein Paar von Rechnern (1022) für jedes Automatenmodell umfasst, wobei jeder Rechner (1022) des Paars von Rechnern (1022) konfiguriert ist zum:
• Sammeln aller Datenelemente (Dᵢ), die von jedem Automaten (101) empfangen wurden, der das Automatenmodell aufweist, und Eliminieren aller doppelt empfangenen Datenelemente (Dᵢ);
• Senden, an mindestens einen Automaten (101), mindestens eines Befehls, der von den gesammelten Daten (Dᵢ) und/oder den vom Bediener bereitgestellten Anweisungen abhängig ist;
• wobei die Rechner (1022) des Schnittstellenmoduls (1021) in asynchroner Redundanz arbeiten;
o Ein erstes Verarbeitungsmodul (1023), umfassend ein Paar von Rechnern (1022), wobei jeder Rechner (1022) des Paars von Rechnern (1022) konfiguriert ist zum:
• Empfangen der gesammelten Daten (Dᵢ) von jedem Rechner (1022) des Schnittstellenmoduls (1021);
• Sortieren der empfangenen Daten (Dᵢ) gemäß ihrem Erfassungszeitpunkt (tᵢ) und Eliminieren der doppelt empfangenen Daten (Dᵢ);
• Berechnen der ersten Informationen (Pᵢ) der entsprechenden Gruppe von Informationen (Iᵢ) für jeden Erfassungszeitpunkt (tᵢ) aus den entsprechenden sortierten Daten (Dᵢ);
• Senden jeder ersten berechneten Information (Pᵢ) an jeden Rechner (1022) der Trennvorrichtung (103);
• wobei die Rechner (1022) des ersten Verarbeitungsmoduls (1023) in aktiver Redundanz arbeiten;
o Ein erstes Bedienerplatzverwaltungsmodul (1024), umfassend einen Rechner (1022) für jeden Bedienerplatz (105) des ersten Satzes (1051) von Bedienerplätzen (105), wobei jeder Rechner (1022) konfiguriert ist zum:
• Empfangen jeder ersten berechneten Information (Pᵢ);
• Senden jeder ersten Information (Pᵢ), die der angeforderten Teilmenge von Informationen (S_{c}) entspricht, an den entsprechenden Bedienerplatz (105);
• Verwalten der grafischen Schnittstelle des entsprechenden Bedienerplatzes (105);
o Ein erstes doppeltes Kommunikationsnetzwerk (1031) mit einem ersten Kanal (1032) und einem zweiten separaten Kanal (1033), das ein erstes Redundanzmodul (1034) umfasst, das über jeden Rechner (1022) des ersten Subsystems (102) verteilt ist, wobei jeder Rechner (1022) des ersten Subsystems (102) konfiguriert ist zum:
• Senden jeder Nachricht, die an mindestens einen anderen Rechner (1022) des ersten Subsystems (102) gerichtet ist, gleichzeitig über den ersten Kanal (1032) und den zweiten Kanal (1033) an das erste Redundanzmodul (1034);
• Empfangen jeder vom ersten Redundanzmodul (1034) an diesen gerichteten Nachricht und Senden einer Bestätigung an das erste Redundanzmodul (1034);
• wobei das erste Redundanzmodul (1034) konfiguriert ist zum:
a. Empfangen der über den ersten Kanal (1032) und/oder über den zweiten Kanal (1033) gesendeten Nachricht;
b. Löschen der über den zweiten Kanal (1033) empfangenen Nachricht, wenn die Nachricht über den ersten Kanal (1032) empfangen wurde;
c. Modifizieren der empfangenen Nachricht durch Hinzufügen einer Bestätigungsanforderung;
d. Übertragen der modifizierten Nachricht gleichzeitig auf dem ersten Kanal (1032) und dem zweiten Kanal (1033) an den weiteren Rechner (1022) des ersten Subsystems (102);
- wobei das zweite Subsystem (104) umfasst:
∘ Ein zweites Verarbeitungsmodul (1041), umfassend ein Paar von Rechnern (1042), wobei jeder Rechner (1042) des Paars von Rechnern (1042) konfiguriert ist zum:
• Empfangen der gesammelten Daten (Dᵢ) und der ersten berechneten Informationen (Pᵢ) von jedem Rechner (1022) der Trennvorrichtung (103);
• Eliminieren der Daten (Dᵢ) und der ersten Informationen (Pᵢ), die doppelt empfangen wurden;
• Berechnen der zweiten Informationen (Sᵢ) der entsprechenden Gruppe von Informationen (Iᵢ) aus den entsprechenden sortierten Daten (Dᵢ) und den entsprechenden sortierten ersten Informationen (Pᵢ) für jeden Erfassungszeitpunkt (tᵢ);
• wobei die Rechner (1042) des zweiten Verarbeitungsmoduls (1041) in aktiver Redundanz arbeiten;
∘ Ein zweites Bedienerplatzverwaltungsmodul (1043), umfassend einen Rechner (1042) für jeden Bedienerplatz (105) des zweiten Satzes (1052) von Bedienerplätzen (105), wobei jeder Rechner (1042) konfiguriert ist zum:
• Empfangen jeder zweiten berechneten Information (Sᵢ);
• Senden jeder zweiten Information (Sᵢ), die der angeforderten Teilmenge von Informationen (S_{c}) entspricht, an den entsprechenden Bedienerplatz (105);
• Verwalten der grafischen Schnittstelle des entsprechenden Bedienerplatzes (105);
∘ Ein zweites doppeltes Kommunikationsnetzwerk (1035) mit einem ersten Kanal (1036) und einem zweiten separaten Kanal (1037), das ein zweites Redundanzmodul (1038) umfasst, das über jeden Rechner (1022) des zweiten Subsystems (104) verteilt ist, wobei jeder Rechner (1042) des zweiten Subsystems (104) konfiguriert ist zum:
• Senden jeder Nachricht, die an mindestens einen anderen Rechner (1042) des zweiten Subsystems (104) gerichtet ist, gleichzeitig über den ersten Kanal (1036) und den zweiten Kanal (1037) an das zweite Redundanzmodul (1038);
• Empfangen jeder vom zweiten Redundanzmodul (1038) an diesen gerichteten Nachricht und Senden einer Bestätigung an das zweite Redundanzmodul (1038);
• wobei das zweite Redundanzmodul (1038) konfiguriert ist zum:
a. Empfangen der über den ersten Kanal (1036) und/oder über den zweiten Kanal (1037) gesendeten Nachricht;
b. Löschen der über den zweiten Kanal (1037) empfangenen Nachricht, wenn die Nachricht über den ersten Kanal (1036) empfangen wurde;
c. Modifizieren der empfangenen Nachricht durch Hinzufügen einer Bestätigungsanforderung;
d. Übertragen der modifizierten Nachricht gleichzeitig auf dem ersten Kanal (1036) und dem zweiten Kanal (1037) an den weiteren Rechner (1042) des zweiten Subsystems (104).

2. System (100) nach Anspruch 1, **dadurch gekennzeichnet, dass** das erste Subsystem (102) ferner eine erste Datenbank (1025) umfasst, die über mindestens einen Teil der Rechner (1022) des ersten Subsystems (102) verteilt ist, die zum Speichern und Verwalten der Daten (Dᵢ) und/oder der ersten Informationen (Pᵢ) konfiguriert ist, und/oder das zweite Subsystem (104) ferner eine zweite Datenbank (1046) umfasst, die über mindestens einen Teil der Rechner (1042) des zweiten Subsystems (104) verteilt ist, die zum Speichern und Verwalten der Daten (Dᵢ), der ersten Informationen (Pᵢ) und der zweiten Information (Sᵢ) konfiguriert ist.

3. System (100) nach einem der vorstehenden Ansprüche,
**dadurch gekennzeichnet, dass** das zweite Subsystem (104) ferner ein Echtzeitmodul (1044) umfasst, das eine Vielzahl von Rechnern (1042) umfasst, wobei jeder Rechner (1042) des Echtzeitmoduls (1044) konfiguriert ist zum:
- Replizieren zumindest eines Teils der Daten (Dᵢ), der ersten Informationen (Pᵢ) und der zweiten Informationen (Sᵢ) des zweiten Verarbeitungsmoduls (1041);
- Bereitstellen der replizierten Daten (Dᵢ), ersten Informationen (Pᵢ) und zweiten Informationen (Sᵢ), die dem unmittelbar vor dem aktuellen Zeitpunkt (t_{c}) liegenden Erfassungszeitpunkt (tⱼ) entsprechen, an das zweite Bedienerplatzverwaltungsmodul (1043);
wobei die Rechner (1042) des Echtzeitmoduls (1044) in funktionaler Redundanz arbeiten.

4. System (100) nach einem der vorstehenden Ansprüche,
**dadurch gekennzeichnet, dass** das zweite Subsystem (104) ferner ein Archivierungsmodul (1045) umfasst, das eine Vielzahl von Rechnern (1042) umfasst, wobei jeder Rechner (1042) des Archivierungsmoduls (1045) konfiguriert ist zum:
- Replizieren und Archivieren eines Teils der Daten (Dᵢ), der ersten Informationen (Pᵢ) und der zweiten Informationen (Sᵢ) des zweiten Verarbeitungsmoduls (1041);
- Bereitstellen der archivierten Daten (Dᵢ), ersten Informationen (Pᵢ) und zweiten Informationen (Sᵢ), die jedem Erfassungszeitpunkt (tᵢ) vor dem Erfassungszeitpunkt (tⱼ) entsprechen, der unmittelbar vor dem aktuellen Zeitpunkt (t_{c}) liegt, an das zweite Bedienerplatzverwaltungsmodul (1043);
wobei die Rechner (1042) des Archivierungsmoduls (1045) in funktionaler Redundanz arbeiten.

5. Verfahren (200) zum Steuern eines kritischen industriellen Prozesses, der durch das System (100) nach einem der vorstehenden Ansprüche implementiert wird, umfassend die folgenden Schritte, die für jeden Zyklus eines Zyklussatzes durchgeführt werden:
- Für jeden Rechner (1022) jedes Paars von Rechnern (1022) des Schnittstellenmoduls (1021), Sammeln aller Datenelemente (Dᵢ), die von jedem Automaten (101) mit einem entsprechenden Automatenmodell empfangen werden, und Eliminieren aller doppelt empfangenen Datenelemente (Dᵢ), wobei die Datenelemente (Dᵢ) jeweils einem Erfassungszeitpunkt (tᵢ) zugeordnet sind, der einem aktuellen Zeitpunkt (t_{c}) vorausgeht (201);
- Empfangen, durch jeden Rechner (1022) des ersten Verarbeitungsmoduls (1023), der durch das Schnittstellenmodul (1021) gesammelten Daten (Dᵢ), Sortieren der empfangenen Daten (Dᵢ) gemäß ihrem Erfassungszeitpunkt (tᵢ), Eliminieren der doppelt empfangenen Daten (Dᵢ), Berechnen der ersten Informationen (Pᵢ) einer Gruppe von Informationen (Iᵢ) für jeden Erfassungszeitpunkt (tᵢ) aus den entsprechenden sortierten Daten (Dᵢ), und Senden jeder ersten berechneten Information (Pᵢ) an jeden Rechner (1022) der Trennvorrichtung (103, 202);
- Empfangen jeder ersten berechneten Information (Pᵢ) durch jeden Rechner (1022) des ersten Bedienerplatzverwaltungsmoduls (1024) und Senden jeder ersten empfangenen Information (Pᵢ), die in einer von einem Bediener angeforderten Teilmenge von Informationen (S_{c}) enthalten ist, an jeden Bedienerplatz (105) des ersten Satzes (1051) von Bedienerplätzen (105, 203);
- Empfangen, durch jeden Rechner (1042) des zweiten Verarbeitungsmoduls (1041), der gesammelten Daten (Dᵢ) und ersten Informationen (Pᵢ), die durch das erste Subsystem (102) berechnet wurden, Erkennen der Daten (Dᵢ) und ersten Informationen (Pᵢ), die gegenüber dem vorherigen Zyklus modifiziert wurden, Eliminieren der Daten (Dᵢ) und ersten Informationen (Pᵢ), die doppelt empfangen wurden, und Berechnen der zweiten Informationen (Sᵢ) der Gruppe von Informationen für jeden Erfassungszeitpunkt (tᵢ) aus den entsprechenden erkannten Daten (Dᵢ) und ersten Informationen (Pᵢ) (204);
- Empfangen jeder zweiten berechneten Information (Sᵢ) durch jeden Rechner (1042) des zweiten Bedienerplatzverwaltungsmoduls (1043) und Senden jeder zweiten empfangenen Information (Sᵢ), die in der angeforderten Teilmenge von Informationen (S_{c}) enthalten ist, an jeden Bedienerplatz (105) des zweiten Satzes (1052) von Bedienerplätzen (105, 205);
- Anzeigen der ersten Informationen (Pᵢ) der Teilmenge von Informationen (S_{c}), die von jedem Bedienerplatz (105) des ersten Satzes (1051) von Bedienerplätzen (105) angefordert werden, und der zweiten Informationen (Sᵢ) der Teilmenge von Informationen (S_{c}), die von jedem Bedienerplatz (105) des zweiten Satzes (1052) von Bedienerplätzen (105) zum aktuellen Zeitpunkt (t_{c}) angefordert werden (206);
- Wenn der Bediener über die grafische Schnittstelle eines Bedienerplatzes (105) des ersten Satzes (1051) vom Bedienerplätzen (105) eine Anweisung gibt, Senden dieser Anweisung an das Schnittstellenmodul (1021, 207);
- Senden mindestens eines Befehls in Abhängigkeit von den empfangenen Daten (Dᵢ) und/oder der Anweisung an mindestens einen Automaten (101) durch das Schnittstellenmodul (1021, 208);
wobei jeder Schritt des Empfangens (202, 203) durch einen Rechner (1022) des ersten Subsystems (102) einen Austausch (212) mindestens einer Nachricht zwischen dem Rechner (1022) und einem weiteren Rechner (1022) des ersten Subsystems (102) mit den folgenden Teilschritten umfasst:
- Gleichzeitiges Senden der Nachricht durch den weiteren Rechner (1022) an das erste Redundanzmodul (1034) über den ersten Kanal (1032) und den zweiten Kanal (1033) des ersten Kommunikationsnetzwerks (1031, 2121);
- Empfangen der gesendeten Nachricht durch das erste Redundanzmodul (1034, 2122);
- Wenn die Nachricht über den ersten Kanal (1032) und über den zweiten Kanal (1033) empfangen wird, Löschen der über den zweiten Kanal (1033) empfangenen Nachricht durch das erste Redundanzmodul (1034, 2123);
- Modifizieren der empfangenen Nachricht durch das erste Redundanzmodul (1034) durch Hinzufügen einer Bestätigungsanforderung (2124);
- Gleichzeitiges Übertragen der modifizierten Nachricht vom ersten Redundanzmodul (1034) über den ersten Kanal (1032) und den zweiten Kanal (1033) an den Rechner (1022, 2125);
- Empfangen der vom Rechner (1022) modifizierten Nachricht und Senden einer Bestätigung an das erste Redundanzmodul (1034, 2126);
wobei jeder Schritt (204, 205) des Empfangens durch einen Rechner (1042) des zweiten Subsystems (104) einen Austausch (213) mindestens einer Nachricht zwischen dem Rechner (1042) und einem weiteren Rechner (1042) des zweiten Subsystems (104) mit den folgenden Teilschritten umfasst:
- Gleichzeitiges Senden der Nachricht durch den weiteren Rechner (1042) an das zweite Redundanzmodul (1038) über den ersten Kanal (1036) und den zweiten Kanal (1037) des zweiten Kommunikationsnetzwerks (1035, 2131);
- Empfangen der gesendeten Nachricht durch das zweite Redundanzmodul (1038, 2132);
- Wenn die Nachricht über den ersten Kanal (1036) und über den zweiten Kanal (1037) empfangen wird, Löschen der über den zweiten Kanal (1037) empfangenen Nachricht durch das zweite Redundanzmodul (1038, 2133);
- Modifizieren der empfangenen Nachricht durch das zweite Redundanzmodul (1038) durch Hinzufügen einer Bestätigungsanforderung (2134);
- Gleichzeitiges Übertragen der vom zweiten Redundanzmodul (1038) modifizierten Nachricht über den ersten Kanal (1036) und den zweiten Kanal (1037) an den Rechner (1042, 2135);
- Empfangen der vom Rechner (1042) modifizierten Nachricht und Senden einer Bestätigung an das zweite Redundanzmodul (1038, 2136).

6. Verfahren (200) nach Anspruch 5, das von dem System (100) mit dem Echtzeitmodul (1044) implementiert wird, **dadurch gekennzeichnet, dass** es ferner die folgenden Schritte umfasst, die von jedem Rechner (1042) des Echtzeitmoduls (1044) ausgeführt werden:
- Replizieren zumindest eines Teils der Daten (Dᵢ), der ersten Informationen (Pᵢ) und der zweiten Informationen (Sᵢ) des zweiten Verarbeitungsmoduls (1041, 2091);
- Senden der replizierten Daten (Dᵢ), ersten Informationen (Pᵢ) und zweiten Informationen (Sᵢ), die dem unmittelbar vor dem aktuellen Zeitpunkt (t_{c}) liegenden Erfassungszeitpunkt (tⱼ) entsprechen, an jeden Rechner (1042) des zweiten Bedienerplatzverwaltungsmoduls (1043, 2092).

7. Verfahren (200) nach einem der Ansprüche 5 oder 6, das von dem System (100) mit dem Archivierungsmodul (1045) implementiert wird,
**dadurch gekennzeichnet, dass** es ferner die folgenden Schritte umfasst, die von jedem Rechner (1042) des Archivierungsmoduls (1045) ausgeführt werden:
- Replizieren und Archivieren zumindest eines Teils der Daten (Dᵢ), der ersten Informationen (Pᵢ) und der zweiten Informationen (Sᵢ) des zweiten Verarbeitungsmoduls (1041, 2101);
- Senden der archivierten Daten (Dᵢ), ersten Informationen (Pᵢ) und zweiten Informationen (Sᵢ), die jedem Erfassungszeitpunkt (tᵢ) entsprechen, der dem unmittelbar vor dem aktuellen Zeitpunkt (t_{c}) liegenden Erfassungszeitpunkt (tⱼ) vorausgeht, an jeden Rechner (1042) des zweiten Bedienerplatzverwaltungsmoduls (1043, 2102).

8. Verfahren (200) nach Anspruch 6 oder 7, **dadurch gekennzeichnet, dass** der Schritt des Sendens (2092, 2102) durch einen Rechner (1042) des zweiten Subsystems (104) einen Austausch (213) mindestens einer Nachricht zwischen dem Rechner (1042) und mindestens einem weiteren Rechner (1042) des zweiten Subsystems (104) mit den folgenden Teilschritten umfasst:
- Gleichzeitiges Senden der Nachricht durch den Rechner (1042) an das zweite Redundanzmodul (1038) über den ersten Kanal (1036) und den zweiten Kanal (1037) des zweiten Kommunikationsnetzwerks (1035, 2131);
- Empfangen der gesendeten Nachricht durch das zweite Redundanzmodul (1038, 2132);
- Wenn die Nachricht über den ersten Kanal (1036) und über den zweiten Kanal (1037) empfangen wird, Löschen der über den zweiten Kanal (1037) empfangenen Nachricht durch das zweite Redundanzmodul (1038, 2133);
- Modifizieren der empfangenen Nachricht durch das zweite Redundanzmodul (1038) durch Hinzufügen einer Bestätigungsanforderung (2134);
- Gleichzeitiges Übertragen der modifizierten Nachricht über den ersten Kanal (1036) und den zweiten Kanal (1037) an den weiteren Rechner (1042, 2135);
- Empfangen der vom weiteren Rechner (1042) modifizierten Nachricht und Senden einer Bestätigung an das zweite Redundanzmodul (1038, 2136).

9. Computerprogrammprodukt, umfassend Anweisungen, die, wenn das Programm auf einem Computer ausgeführt wird, diesen veranlassen, die Schritte des Verfahrens (200) nach einem beliebigen der Ansprüche 5 bis 8 zu implementieren.

10. Computerprogrammprodukt nach Anspruch 9,
**dadurch gekennzeichnet, dass** es in der Sprache ADA abgefasst ist.

## Claims

1. A system (100) for controlling and assisting with the control of a critical industrial process, comprising:
- a first set (1051) of operator stations (105) each comprising a graphical interface and each being configured to:
∘ receive instructions from an operator via the graphical interface;
∘ display, at a current time (t_{c}) and at the operator's request, first information (Pᵢ) of a subset of information (S_{c}), the subset of information (S_{c}) being included in a set of information (E_{c}) comprising a group of information (lᵢ) for each acquisition time (tᵢ) of a plurality of acquisition times (tᵢ) preceding the current time (t_{c}), each group of information (Iᵢ) comprising first information (Pᵢ) for controlling the industrial process and second information (Sᵢ) for assisting with the control of the industrial process;
- a second set (1052) of operator stations (105) each configured to display, at the current time (t_{c}) and at the operator's request, the second information (Sᵢ) of the subset of information (S_{c});
- a first subsystem (102) for controlling the industrial process having cyclic operation, a second subsystem (104) for assisting with the control of the industrial process having event-based operation, and a unidirectional isolation device (103) included in the first subsystem (102) and in the second subsystem (104), including a pair of computers (1022), the first subsystem (102) comprising:
∘ an interface module (1021) configured to collect data (Dᵢ) from a plurality of programmable logic controllers (101), each of which has a controller model, each item of data (Dᵢ) being associated with an acquisition time (tᵢ) of the plurality of acquisition times (tᵢ), the interface module (1021) including at least one pair of computers (1022) for each controller model, each computer (1022) of the pair of computers (1022) being configured to:
• collect each item of data (Dᵢ) received by each controller (101) having the controller model and eliminate each duplicate item of data (Dᵢ) received;
• send at least one command to at least one controller (101), depending on the data (Dᵢ) collected and/or instructions provided by the operator;
• the computers (1022) of the interface module (1021) operating in asynchronous redundancy;
∘ a first processing module (1023) including a pair of computers (1022), each computer (1022) of the pair of computers (1022) being configured to:
• receive, from each computer (1022) of the interface module (1021), the data (Dᵢ) collected;
• sort the data (Dᵢ) received according to the acquisition time (tᵢ) thereof and eliminate the duplicate data (Dᵢ) received;
• calculate, for each acquisition time (tᵢ), the first information (Pᵢ) of the corresponding group of information (Iᵢ), based on the corresponding sorted data (Dᵢ);
• send, to each computer (1022) of the isolation device (103), each first piece of information (Pᵢ) calculated;
• the computers (1022) of the first processing module (1023) operating in active redundancy;
∘ a first module (1024) for managing operator stations, including a computer (1022) for each operator station (105) of the first set (1051) of operator stations (105), each computer (1022) being configured to:
• receive each first piece of information (Pᵢ) calculated;
• send each first piece of information (Pᵢ) corresponding to the requested subset of information (S_{c}) to the corresponding operator station (105);
• manage the graphical interface of the corresponding operator station (105);
o a first dual communication network (1031) having a first channel (1032) and a separate second channel (1033), comprising a first redundancy module (1034) distributed on each computer (1022) of the first subsystem (102), each computer (1022) of the first subsystem (102) being configured to:
• send, to the first redundancy module (1034), each message intended for at least one other computer (1022) of the first subsystem (102), simultaneously over the first channel (1032) and the second channel (1033);
• receive each message intended for it from the first redundancy module (1034) and send an acknowledgment to the first redundancy module (1034);
• the first redundancy module (1034) being configured to:
a. receive the message sent via the first channel (1032) and/or via the second channel (1033);
b. delete the message received via the second channel (1033) if the message was received via the first channel (1032);
c. modify the received message by adding an acknowledgment request;
d. transmit the modified message, simultaneously over the first channel (1032) and the second channel (1033), to the other computer (1022) of the first subsystem (102);
- the second subsystem (104) comprising:
o a second processing module (1041) including a pair of computers (1042), each computer (1042) of the pair of computers (1042) being configured to:
• receive, from each computer (1022) of the isolation device (103), the data (Dᵢ) collected and the first information (Pᵢ) calculated;
• eliminate the duplicate data (Dᵢ) and the first information (Pᵢ) received;
• calculate, for each acquisition time (tᵢ), the second information (Sᵢ) of the corresponding group of information (Iᵢ), from the corresponding sorted data (Dᵢ) and first information (Pᵢ);
• the computers (1042) of the second processing module (1041) operating in active redundancy;
∘ a second module (1043) for managing operator stations including a computer (1042) for each operator station (105) of the second set (1052) of operator stations (105), each computer (1042) being configured to:
• receive each second piece of information (Sᵢ) calculated;
• send each second piece of information (Sᵢ) corresponding to the requested subset of information (S_{c}) to the corresponding operator station (105);
• manage the graphical interface of the corresponding operator station (105);
∘ a second dual communication network (1035) having a first channel (1036) and a separate second channel (1037), comprising a second redundancy module (1038) distributed on each computer (1022) of the second subsystem (104), each computer (1042) of the second subsystem (104) being configured to:
• send, to the second redundancy module (1038), each message intended for at least one other computer (1042) of the second subsystem (104), simultaneously over the first channel (1036) and the second channel (1037);
• receive each message intended for it from the second redundancy module (1038) and send an acknowledgment to the second redundancy module (1038);
• the second redundancy module (1038) being configured to:
a. receive the message sent via the first channel (1036) and/or via the second channel (1037);
b. delete the message received via the second channel (1037) if the message was received via the first channel (1036);
c. modify the received message by adding an acknowledgment request;
d. transmit the modified message, simultaneously over the first channel (1036) and the second channel (1037), to the other computer (1042) of the first subsystem (104).

2. The system (100) according to claim 1, **characterized in that** the first subsystem (102) further includes a first database (1025) which is distributed over at least part of the computers (1022) of the first subsystem (102) and configured to store and manage the data (Dᵢ) and the first information (Pᵢ) and/or the second subsystem (104) further includes a second database (1046) which is distributed over at least part of the computers (1042) of the second subsystem (104) and configured to store and manage the data (Dᵢ), the first information (Pᵢ) and the second information (Sᵢ).

3. The system (100) according to any of the preceding claims, **characterized in that** the second subsystem (104) further includes a current time module (1044) including a plurality of computers (1042), each computer (1042) of the current time module (1044) being configured to:
- replicate at least part of the data (Dᵢ), first information (Pᵢ) and second information (Si) of the second processing module (1041);
- provide the second module (1043) for managing operator stations with the replicated data (Dᵢ), first information (Pᵢ) and second information (Sᵢ) corresponding to the acquisition time (tⱼ) immediately preceding the current time (t_{c});
the computers (1042) of the current time module (1044) operating in functional redundancy.

4. The system (100) according to any of the preceding claims, **characterized in that** the second subsystem (104) further includes an archiving module (1045) including a plurality of computers (1042), each computer (1042) of the archiving module (1045) being configured to:
- replicate and archive part of the data (Dᵢ), first information (Pᵢ) and second information (Sᵢ) of the second processing module (1041);
- provide the second module (1043) for managing operator stations with the archived data (Dᵢ), first information (Pᵢ) and second information (Sᵢ) corresponding to each acquisition time (tᵢ) preceding the acquisition time (tⱼ) immediately preceding the current time (t_{c});
the computers (1042) of the archiving module (1045) operating in functional redundancy.

5. A method (200) for controlling a critical industrial process implemented by the system (100) according to any of the preceding claims, comprising the following steps carried out for each cycle of a set of cycles:
- for each computer (1022) of each pair of computers (1022) of the interface module (1021), collecting each item of data (Dᵢ) received by each controller (101) having a corresponding controller model and eliminating each duplicate item of data (Dᵢ) received, each item of data (Dᵢ) being associated with an acquisition time (tᵢ) preceding a current time (t_{c}, 201);
- each computer (1022) of the first processing module (1023) receiving data (Dᵢ) collected by the interface module (1021), sorting the received data (Dᵢ) according to the acquisition time (tᵢ) thereof, eliminating the duplicate data (Dᵢ) received and calculating first information (Pᵢ) of a group of information (Iᵢ) for each acquisition time (tᵢ) from corresponding sorted data (Dᵢ) and sending, to each computer (1022) of the isolation device (103), each first piece of information (Pᵢ) (202) calculated;
- each computer (1022) of the first module (1024) for managing operator stations receiving each first piece of information (Pᵢ) calculated and sending, to each operator station (105) of the first set (1051) of operator stations (105), each received first piece of information (Pᵢ) included in a subset of information (S_{c}) requested by an operator (203);
- each computer (1042) of the second processing module (1041) receiving the data (Dᵢ) collected and the first information (Pᵢ) calculated by the first subsystem (102), detecting the data (Dᵢ) and first information (Pᵢ) modified with respect to the previous cycle, eliminating the duplicate data (Dᵢ) and first information (Pᵢ) received and calculating second information (Sᵢ) of the group of information for each acquisition time (tᵢ), from the corresponding detected data (Dᵢ) and first information (Pᵢ) (204);
- each computer (1042) of the second module (1043) for managing operator stations receiving each second piece of information (Sᵢ) calculated and sending, to each operator station (105) of the second set (1052) of operator stations (105), each second piece of information (Sᵢ) received, comprised in the subset of information (S_{c}) (205) requested;
- displaying the first information (Pᵢ) of the subset of information (S_{c}) requested by each operator station (105) of the first set (1051) of operator stations (105) and the second information (Sᵢ) of the subset of information (S_{c}) requested by each operator station (105) of the second set (1052) of operator stations (105), at the current time (t_{c}, 206);
- if the operator provides an instruction via the graphical interface of an operator station (105) of the first set (1051) of operator stations (105), sending the instruction to the interface module (1021, 207);
- the interface module (1021) sending to at least one controller (101, 208) at least one command dependent on the data (Dᵢ) received and/or the instruction;
each step (202, 203) of receiving by a computer (1022) of the first subsystem (102) including an exchange (212) of at least one message between the computer (1022) and another computer (1022) of the first subsystem (102) including the following sub-steps:
- the other computer (1022) sending the message to the first redundancy module (1034, 2121) simultaneously over the first channel (1032) and the second channel (1033) of the first communication network (1031);
- the first redundancy module (1034) receiving the sent message (2122);
- if the message is received via the first channel (1032) and via the second channel (1033), the redundancy module (1034) deleting the message received via the second channel (1033, 2123);
- the first redundancy module (1034) modifying the message received by adding an acknowledgment request (2124);
- the first redundancy module (1034, 2125) transmitting the modified message to the computer (1022) simultaneously over the first channel (1032) and the second channel (1033);
- the computer (1022) receiving the modified message and sending an acknowledgment to the first redundancy module (1034, 2126);
each step (204, 205) of receiving by a computer (1042) of the second subsystem (104) including an exchange (213) of at least one message between the computer (1042) and another computer (1042) of the second subsystem (104) including the following sub-steps:
- the other computer (1042) sending the message to the second redundancy module (1038, 2131) simultaneously over the first channel (1036) and the second channel (1037) of the second communication network (1035);
- the second redundancy module (1038) receiving the sent message (2132);
- if the message is received via the first channel (1036) and via the second channel (1037), the second redundancy module (1038) deleting the message received via the second channel (1037, 2133);
- the second redundancy module (1038) modifying the message received by adding an acknowledgment request (2134);
- the second redundancy module (1038, 2135) transmitting the modified message to the computer (1042) simultaneously over the first channel (1036) and the second channel (1037);
- the computer (1042) receiving the modified message and sending an acknowledgment to the second redundancy module (1038, 2136).

6. The method (200) according to claim 5 implemented by the system (100) including the current time module (1044), **characterized in that** it further includes the following steps performed by each computer (1042) of the current time module (1044):
- replicating at least part of the data (Dᵢ), the first information (Pᵢ) and the second information (Sᵢ) from the second processing module (1041, 2091);
- sending, to each computer (1042) of the second module (1043) for managing operator stations, replicated data (Dᵢ), first information (Pᵢ) and second information (Sᵢ) corresponding to the acquisition time (tⱼ) immediately preceding the current time (tₑ, 2092).

7. The method (200) according to either of claims 5 or 6 implemented by the system (100) including the archiving module (1045), **characterized in that** it further includes the following steps performed by each computer (1042) of the archiving module (1045):
- replicating and archiving at least part of the data (Dᵢ), first information (Pᵢ) and second information (Sᵢ) from the second processing module (1041, 2101);
- sending, to each computer (1042) of the second module (1043) for managing operator stations, archived data (Dᵢ), first information (Pᵢ) and second information (Sᵢ) corresponding to each acquisition time (tᵢ) preceding the acquisition time (tⱼ) immediately preceding the current time (t_{c}, 2102).

8. The method (200) according to claim 6 or 7, **characterized in that** the step (2092, 2102) of sending by a computer (1042) of the second subsystem (104) includes an exchange (213) of at least one message between the computer (1042) and at least one other computer (1042) of the second subsystem (104), including the following sub-steps:
- the computer (1042) sending the message to the second redundancy module (1038, 2131) simultaneously over the first channel (1036) and the second channel (1037) of the second communication network (1035);
- the second redundancy module (1038) receiving the sent message (2132);
- if the message is received via the first channel (1036) and via the second channel (1037), the second redundancy module (1038) deleting the message received via the second channel (1037, 2133);
- the second redundancy module (1038) modifying the message received by adding an acknowledgment request (2134);
- transmitting the modified message to the other computer (1042, 2135) simultaneously over the first channel (1036) and the second channel (1037);
- the other computer (1042) receiving the modified message and sending an acknowledgment to the second redundancy module (1038, 2136).

9. A computer program product comprising instructions which, when the program is executed on a computer, cause the computer to carry out the steps of the method (200) according to any of claims 5 to 8.

10. The computer program product according to claim 9, **characterized in that** it is written in ADA language.
